(19) Europäisches Patentamt
European Patent Office
Office européen des brevets

(11) **EP 0 631 271 B1**

(12) **EUROPEAN PATENT SPECIFICATION**

(45) Date of publication and mention
of the grant of the patent:
**25.11.1998 Bulletin 1998/48**

(51) Int Cl.6: **G09G 3/36**

(21) Application number: **94304695.3**

(22) Date of filing: **28.06.1994**

(54) **Active matrix display using storage capacitors**

Anzeigevorrichtung mit aktiver Matrix und Speicherkondensatoren

Dispositif d'affichage à matrice active avec condensateurs de stockage

(84) Designated Contracting States:
**DE GB NL**

(30) Priority: 28.06.1993 JP 157353/93
28.12.1993 JP 349921/93

(43) Date of publication of application:
**28.12.1994 Bulletin 1994/52**

(73) Proprietor: **SHARP KABUSHIKI KAISHA**
**Osaka-shi, Osaka-fu 545 (JP)**

(72) Inventors:
• **Yoneda, Hiroshi**
**Ikoma-shi, Nara-ken (JP)**
• **Katoh, Kenichi**
**Tenri-shi, Nara-ken (JP)**
• **Ishii, Yutaka**
**Nara-shi, Nara-ken (JP)**
• **Kubota, Yasushi**
**Sakurai-shi, Nara-ken (JP)**

(74) Representative: **Suckling, Andrew Michael et al**
**Marks & Clerk,**
**Nash Court,**
**Oxford Business Park South**
**Oxford OX4 2RU (GB)**

(56) References cited:
EP-A- 0 391 654          EP-A- 0 586 155
US-A- 4 471 347

## Description

## BACKGROUND OF THE INVENTION

### 1. Field of the Invention:

The present invention relates to an image display apparatus such as an active matrix driving liquid crystal display apparatus.

### 2. Description of the Related Art:

As an image display apparatus, a display apparatus employing an active matrix driving mechanism has been known. This image display apparatus includes a plurality of scanning signal lines and a plurality of data signal lines. Each of the scanning signal lines intersects respective data signal lines. Pixels are provided in the portions surrounded by two adjacent scanning signal lines and two adjacent data signal lines, and are arranged into a matrix pattern.

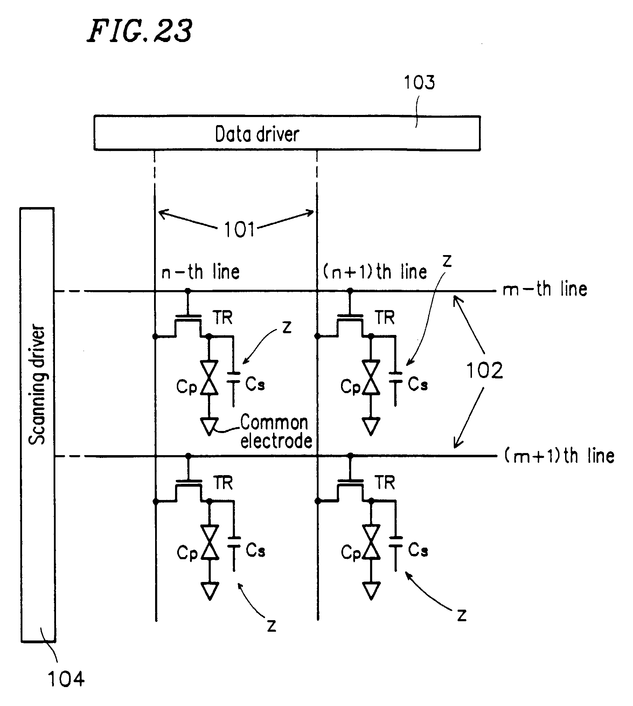

In the case of a liquid crystal display for instance, as shown in Figure **23**, each pixel **Z** comprises a transistor **TR** such as a TFT (Thin Film Transistor) or an FET as a driving element, a pixel capacitor **Cp,** and an storage capacitor **Cs** which is added as necessary. As shown in this figure, a data signal line **101** is connected to one of the electrodes of the pixel capacitor **Cp** through the drain and source of the transistor **TR**. The gate of the transistor **TR** is connected to a scanning signal line **102**, and the other electrode of the pixel capacitor **Cp** (common electrode) is connected to a common power source line (not shown).

The scanning signal lines **102** are connected to a scanning driver **104** which outputs a scanning signal. The data signal lines **101** are connected to a data driver **103** which samples an image signal and transfers it to the data signal lines **101** as a display data signal. The data driver **103** outputs a display data signal to the data scanning lines **101** for every scanning signal line **102** or for every pixel **Z**. The transistor **TR** is turned on when the scanning signal line **102** is activated, and then, the display data transferred on the data signal line **101** is written in the pixel capacitor **Cp** and the storage capacitor **Cs**.

A display at the pixel **Z** is maintained by the electric charge written in the pixel capacitors **Cp** and the storage capacitor **Cs**. An alternating current drive (inversion driving) is required to prevent the deterioration of the pixel capacitor **Cp**, or of the liquid crystal. When the alternating current drive is performed by a frame cycle, flickers of 30 Hz or 25 Hz are apparent though it may be different depending on the field frequencies (or frame frequencies) of the signals. Therefore, it is common to perform a inversion driving, a so-called "frame + 1H line", in which the polarity of an electric charge supplied to the pixel capacitor is inverted by every horizontal scanning in addition to the frame inversion.

In the display apparatus requiring alternating current driving, such as a liquid crystal display apparatus, even if the contents (information) of a displayed image remain unchanged, a data driver needs to supply data signals to the data signal lines periodically for writing data in each of the pixels. This means a large amount of electric current is required for display.

This type of display apparatus has been increasingly used for the displays of hand-held information terminals in recent years. Since these hand-held information terminals are used outdoors and required to be driven with batteries or the like, it is preferable to lower their power consumption.

To solve this problem, liquid crystal display apparatuses capable of a binary display (two-tone display), which do not need to output data from a data driver periodically with the alternating current driving of the common electrode, have been proposed (Japanese Laid-Open Patent publication Nos. 58-143389 and 59-155893). These apparatuses includes data storage means and control means within each pixel. The data signal output on the data signal line from the data driver is input to the data storage means and the data is stored therein. States of the control means are controlled with the data, and the control means supplies the pixel electrode with a signal as long as the display data remains unchanged. Moreover, a display apparatus capable of imperfectly performing multi-tone display in a similar mechanism has been also proposed (Japanese Laid-Open Patent Publication No. 59-65879).

However, these proposed liquid crystal display apparatuses are essentially for the binary display (two-scale display). Although Japanese Laid-Open Patent Publication No. 59-65879 suggests a possibility for the multi-scale display, the circuit configuration of each pixel will become complicated and the power consumption can not be lowered sufficiently.

US-A-4 471 347, on which the preamble of claim 1 is based, discloses an active matrix type image display apparatus comprising: a plurality of data signal lines; a plurality of scanning signal lines crossing the plurality of data signal lines; and a plurality of pixel portions disposed in a matrix in areas enclosed by the plurality of data signal lines and the plurality of scanning signal lines; wherein each of the plurality of pixel portions includes: a pixel capacitor for storing electric charge supplied from at least one of the plurality of data signal lines, to display an image; and a switching means; wherein at least one pixel portion further comprises a storage means.

The storage means stores charge so as to maintain the gate voltage of the switch (which is a transistor). The storage means is not associated with the pixel capacitor.

A first aspect of the present invention provides an active matrix type image display apparatus comprising: a plurality of data signal lines; a plurality of scanning signal lines crossing the plurality of data signal lines; and a plurality of pixel portions disposed in a matrix in areas enclosed by the plurality of data signal lines and the plurality of scanning signal lines, wherein each of the plurality of pixel portions includes a pixel capacitance for storing electric charge supplied from at least one of the plurality of data signal lines, to display an image; and a switching means;

wherein at least one pixel portion further comprises a storage means;

characterised in that the switching means selectively electrically connects the pixel capacitance in the at least one pixel portion to the storage means; and in that the storage means stores at least part of an electrical charge stored in the pixel capacitance.

In a preferred embodiment, the switching means electrically connects at least one of the data signal lines to the pixel capacitance for a predetermined period.

In a preferred embodiment the storage means has a first storage capacitor and a second storage capacitor.

In a preferred embodiment the switching means receives a first control signal and a second control signal from at least one of the plurality of scanning signal lines, the switching means electrically connecting the pixel capacitance to the first storage capacitor when the first control signal is received, and the switching means electrically connecting the pixel capacitance to the second storage capacitor when the second control signal is received.

In another embodiment of the invention, the switching means receives both the first control signal and the second control signal at least once in the predetermined period.

In another embodiment of the invention, the switching means receives a first control signal and a second control signal from at least one of the plurality of scanning signal lines, the switching means transferring electric charge having a positive polarity from the pixel capacitance to the storage means when the first control signal is received, and the switching means transferring electric charge having a negative polarity from the pixel capacitance to the storage means when the second control signal is received.

In another embodiment of the invention, the switching means receives both the first control signal and the second control signal at least once in the predetermined period.

In another embodiment of the invention, the pixel capacitance includes a liquid crystal capacitor having a pair of electrodes and a liquid crystal layer disposed between the electrodes, and a storage capacitor disposed in parallel with the liquid crystal capacitor.

A second aspect of the present invention provides an active matrix type image display apparatus comprising: a plurality of data signal lines; sampling circuits for supplying image signals to the plurality of data signal lines; a plurality of scanning signal lines crossing the plurality of data signal lines; and a plurality of pixel portions disposed in a matrix in areas enclosed by the plurality of data signal lines and the plurality of scanning signal lines, wherein one of the sampling circuits includes:

a sampling capacitance for storing electrical charge corresponding to the image signal;
storage means for storing at least part of the electrical charge stored in the sampling capacitance; and
re-use means for enabling electrical charge stored in the sampling capacitance to be re-used by: (a) transferring at least part of the electrical charge stored in the sampling capacitance to the storage means thereby to store the transferred part of the electrical charge in the storage means; and (b) subsequently returning at least part of the electrical charge stored in the storage means to the sampling capacitance.

In one embodiment, the storage means comprises a first storage capacitor for storing electrical charge having a positive polarity from the sampling capacitance and a second storage capacitor for storing electrical charge having a negative polarity from the sampling capacitance.

In one embodiment, the re-use means comprises:

a first switching means which selects one between an operation for transferring at least part of an electrical charge having a positive polarity stored in the sampling capacitance to the first storage capacitor and an operation for transferring at least part of the electrical charge stored in the first storage capacitor to the sampling capacitance; and
a second switching means which selects one between an operation for transferring at least part of an electrical charge having a negative polarity stored in the sampling capacitance to the second storage capacitor and an operation for transferring at least part of the electrical charge stored in the second storage capacitor to the sampling capacitance.

In one embodiment, the sampling circuit further includes a sampling switch for supplying an image signal to the data signal line associated with the sampling circuit during a sampling period for storing electrical charge on the sampling capacitance.

In one embodiment, the re-use means returns at least part of the electrical charge stored in the storage means to the sampling capacitance immediately before or after the sampling period.

In one embodiment, the sampling capacitance is directly connected to the data signal line associated with the sampling circuit.

In one embodiment, the re-use means comprises a switching means which selects one between an operation for transferring at least part of an electrical charge stored in the sampling capacitance to the storage means and an operation for transferring at least part of the electrical charge stored in the storage means to the sampling capacitance.

In one embodiment, the polarity of the electrical charge stored in the sampling capacitance is inverted in response to the inversion of the polarity of the image signal applied to the data signal line associated with the sampling circuit.

A third aspect of the present invention provides an active matrix type image display apparatus comprising: a plurality of data signal lines; a plurality of scanning signal lines crossing the plurality of data signal lines; and a plurality of pixel portions disposed in a matrix in areas enclosed by the plurality of data signal lines and the plurality of scanning signal lines, wherein each of the plurality of pixel portions includes a pixel capacitance for storing electrical charge supplied from at least one of the plurality of data signal lines, to display an image; and a switching means;

characterised in that the switching means is adapted to selectively electrically connect the pixel capacitance of a first pixel portion to the pixel capacitance of a second pixel portion, whereby at least part of an electrical charge stored in the pixel capacitance of the first pixel portion is transferred to the pixel capacitance of the second pixel portion.

In one embodiment of the invention, the image display apparatus further includes at least one control signal line, and the switching means electrically connects the pixel capacitance of the first pixel portion to the pixel capacitance of the second pixel portion, according to a control signal received from the control signal line.

In another embodiment of the invention, the pixel capacitance includes a liquid crystal capacitor having liquid crystal and a pair of electrodes disposed with the liquid crystal interposed therebetween, and a storage capacitor disposed in parallel with the liquid crystal capacitor.

The present invention also provides a method of displaying an image on an active matrix type image display apparatus having a plurality of data signal lines, and a plurality of pixel portions disposed in a matrix, each of the plurality of pixel portions having a pixel capacitor for storing electric charge to display an image; the method comprising:

a first step of supplying electric charge corresponding to image data to a pixel capacitor of a first pixel portion via one of the plurality of data signal lines; a second step of supplying electric charge corresponding to image data to a pixel capacitor of a second pixel portion via one of the plurality of data signal lines; and a third step of electrically connecting the pixel capacitor of the first pixel portion to the pixel capacitor of the second pixel portion.

In one embodiment, the first step is a step of supplying electric charge having a first polarity to the pixel capacitor of the first pixel portion, and the second step is a step of supplying electric charge having a second polarity, which is different from the first polarity, to the pixel capacitor of the second pixel portion.

According to the present invention, display data (electric charge) supplied to the pixel capacitor for display is written and stored in the storage means by control means (switching means). The display data (electric charge) stored in the storage means may be read by the control means and used for display once again.

Display data (electric charge) provided to the sampling capacitor in the data driver may be written and stored in the storage means. The display data (electric charge) stored in the storage means may be read again into the sampling capacitor in the following frame and used for display.

By connecting a plurality of pixel electrodes to each other in a frame, a part of an electric charge used at a pixel can be used to perform display at another pixel.

According to the invention, since a part of or all of the data (electric charge) used for the previous display can be reused for the following display, the power consumption of an apparatus can be reduced effectively.

Thus, the invention described herein makes possible the advantage of providing an image display apparatus capable of sufficiently lowering the power consumption.

This advantage of the present invention will become apparent to those skilled in the art upon reading and understanding the following detailed description with reference to the accompanying figures.

## BRIEF DESCRIPTION OF THE DRAWINGS

Figure **1** is a block diagram schematically illustrating an image display apparatus according to the invention.

Figure **2** is a view of an example of a liquid crystal display apparatus performing a frame inversion to which the invention is applied.

Figures **3A** and **3B** are circuit diagrams of the pixel portions in a case where the invention is applied to a configuration where a signal is provided to each pixel from a plurality of scanning signal lines.

Figures **4A** and **4B** are examples of the driving signal wave patterns used in the circuits shown in Figures **3A** and **3B**.

Figure **5** is another circuit diagram of the pixel portions in a case the invention is applied to a configuration where a signal is provided to each pixel from a plurality of scanning signal lines.

Figure **6** is an example of a signal driving wave pattern used in the circuit shown in Figure **5**.

Figures **7A** and **7B** are other circuit diagrams of the pixel portions in a case the invention is applied to a configuration where a signal is provided to each pixel from a plurality of scanning signal lines.

Figures **8A** and **8B** are the driving signal wave patterns used in the circuits shown in Figures **7A** and **7B**, respectively.

Figure **9** is a diagram showing a case where the invention is applied to a sampling circuit of a liquid crystal display apparatus.

Figures **10A** and **10B** are diagrams showing exemplary constructions of a transfer switch of the sampling circuit shown in Figure **9**.

Figure **11** is a diagram showing a basic concept of a liquid crystal display apparatus according to another example of the invention.

Figure **12** is a diagram for illustrating a data transfer method in a frame and line inversion drive used in the example of the invention.

Figure **13** is a circuit diagram showing another example of the invention.

Figure **14** shows exemplary driving waveforms used in the example shown in Figure **13**.

Figure **15** shows a modification of the example shown in Figure **13**, and shows another exemplary connection of charge transfer switches.

Figure **16** shows a modification of the example shown in Figure **13**, and shows another exemplary connection of charge transfer switches.

Figures **17A, 17B**, and **17C** show examples of a construction of a charge transfer switch.

Figure **18** is a diagram showing an example in which the charge transfer is performed by each scanning signal line unit according to the invention.

Figure **19** shows exemplary driving waveforms of the scanning signal lines used in the example shown in Figure **18**.

Figure **20** is a cross-sectional view showing a reflection type display apparatus to which the present invention is applied.

Figure **21** is a cross-sectional view showing a transmission type display apparatus to which the present invention is applied.

Figure **22** is a cross-sectional view schematically showing the case where the invention is applied to a transmission type liquid crystal display apparatus.

Figure **23** is a diagram showing a circuit of a conventional liquid crystal display apparatus.

## DESCRIPTION OF THE PREFERRED EMBODIMENTS

The examples of the invention will be described referring to the accompanying drawings.

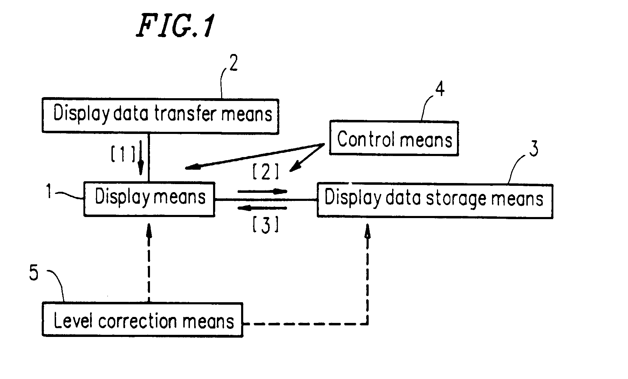

Figure **1** is a block diagram which schematically illustrates an image display apparatus of the invention. The image display apparatus comprises display means **1** having a pixel for performing display, display data transfer means **2** for supplying a display data signal to the display means **1**, display data signal storage means **3** for accumulating (storing) the data signal supplied to the display means **1**, control means **4** for controlling the display data storage means **3**, and providing the display means **1** with the data signal, and level correction means **5** for correcting the level of the data signal.

In the display apparatus of the invention, a display data signal output from the display data transfer means **2**, such as a data driver, is transferred to the display means **1** ([1]). In the display apparatus, the information (data) accumulated in the display means **1** is refreshed during every predetermined period. For instance, in the case of a liquid crystal display apparatus, a pixel having liquid crystal is driven by an alternating current at a predetermined frequency. The information accumulated in the display means **1** is transferred to and accumulated in the display data storage means **3** based on a control signal from the control means **4** ([2]). Then, the data signal accumulated in the display data storage means **3** is again transferred to the display means **1** as necessary based on a control signal from the control means **4** and used for display ([3]). Therefore, the display data signal (electric charge) supplied from the display data transfer means **2** to the display means **1** in the pixel portion is reused. The level correction means **5** corrects the level of a data signal when the data signal fluctuates or such a fluctuation is expected in the above-described paths [2] and [3]. There are both writing means and reading means in each of the paths [2] and [3].

In a general display apparatus, the same information is often displayed successively in several fields in a certain short period of time. This tendency is especially common in the cases where the information processed by a computer or the like is displayed. The tendency is also found significant in any adjacent display lines (scanning signal lines) on a screen. Thus, in the above-described image display apparatus, the data signal accumulated in the display data storage means **3** can be transferred to the display means **1** as necessary, and is used for display. The low power consumption is thereby attained effectively.

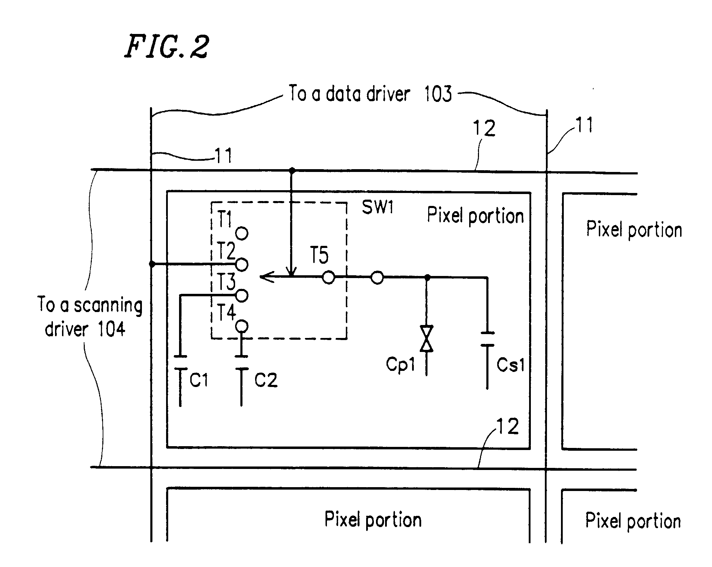

Figure **2** shows an example where the invention is applied to an active matrix type liquid crystal display apparatus which displays information with a frame inversion. The liquid crystal display apparatus comprises a plurality of data signal lines **11**, which are also called source bus lines, connected to a data driver, and a plurality of scanning signal lines **12** connected to a scanning driver and intersecting the data signal lines **11**. Pixel portions are arranged in a matrix pattern at a plurality of regions surrounded by a plurality of data signal lines **11** and a plurality of scanning signal lines **12**. Each of the pixel portions comprises a control switch **SW1** having a switching element represented, for instance, by a transistor, a storage capacitor **Cs1** connected to the control switch **SW1**, a liquid crystal capacitor **Cp1** (as display means having a predetermined capacitance), a positive data holding capacitor **C1**, and a negative data holding capacitor **C2**. The liquid crystal capacitor **Cp1** has a pair of electrodes for accumulating electric charge, and a liquid crystal material is interposed between the pair of electrodes. The storage capacitor **Cs1** is connected in parallel to the liquid crystal capacitor **Cp1** and used as an electric charge accumulation means for stabilizing displayed images. The control switch **SW1** is connected to both of the signal lines **11** and **12**, and used for both writing means and reading means (used for the control means). The storage capacitor **Cs1** may be omitted.

The above-described control switch **SW1** includes five terminals **T1**, **T2**, **T3**, **T4**, and **T5**. The terminal **T1** is in a open state, the terminal **T2** is connected to the data signal line **11**, the terminal **T3** is connected to the positive data holding capacitor **C1** which holds a positive signal, the terminal **T4** is connected to the negative data holding capacitor **C2** which holds a negative signal, and the terminal **T5** is connected to the storage capacitor **Cs1** and the liquid crystal capacitor **Cp1**. The control switch **SW1** is controlled so as to have any one of the following four states **A**, **B**, **C**, or **D** by a signal from the scanning signal line **12**. The state of the terminal **T5** being connected to the terminal **T1** is denoted by a state **A**. The state where the terminal **T5** is connected to a terminal **T2** is denoted by a state **B**. The state where the terminal **T5** is connected to the terminal **T3** is denoted by a state **C**. The state where the terminal **T5** is connected to the terminal **T4** is denoted by a state **D**.

The operation of the liquid crystal apparatus having the above-described configuration will be described referring to examples. When the state of the control switch **SW1** is at the state **B**, the terminal **T2** is connected to the terminal **T5** in the control switch **SW1**, and positive data on the data signal line **11** is written into a pixel capacitor having the storage capacitor **Cs1** and the liquid crystal capacitor **Cp1**. In the display period following the writing period, the state of the control switch **SW1** indicates the state **A**, the terminal **T5** is connected to the terminal **T1**, and the data written in the pixel capacitor during the above-described writing period is displayed at the liquid crystal capacitor.

After the period of the display for the positive data signal, the control switch **SW1** is set to the state **C** and at least a part of the data (electric charge) written in the pixel is transferred to the capacitor **C1**.

Then, the control switch **SW1** is set to the state **B** to write a negative data signal transferred on the data signal line **11** into the pixel capacitor. After the writing period, the state of the control switch is set to **A** and the display period starts.

Next, after the display period for the negative data signal, the switch **SW1** is set to the state **D** to transfer the data signal (electric charge) written in the pixel capacitor to the negative data holding capacitor **C2**.

When the positive data signal is displayed again, the control switch **SW1** is set to the state **C** to write at least a part of the electric charge having been written in the capacitor **C1** into the pixel capacitor. Thereby, the electric charge written in the pixel capacitor and the capacitor **C1** are redistributed and each capacitor receives electric charge proportional to its capacitance ratio. As described above, since the display element performs an inversion drive and the electric charge written in the pixel capacitor and the electric charge written in the positive data holding capacitor **C1** have opposite polarities from each other, the redistributed electric charge is smaller than the electric charge stored during the previous (two fields before) positive data display period. Thus, when the electric charges necessary for the display in the current field are not equal to the redistributed electric charge, the pixel capacitor needs additional electric charging. This addition of electric charging is performed by setting the control switch **SW1** to the state **B** and writing positive data from the data signal line **11** into the pixel capacitor. Because the electric charge to be written is only an additional amount at this time, the power consumption is significantly reduced.

After the writing period, the control switch **SW1** is set to the state **A** and the display period starts. The control switch **SW1** is again set to the state **C** immediately before the ending of the display period to transfer the data (electric charge) having written in the pixel capacitor to the positive data holding capacitor **C1**.

After the display period, a negative data is written into the pixel capacitor in the same manner used for the above-described positive data. The control switch **SW1** is set to the state **D** in the first place to write the electric charge written in the capacitor **C2** into the pixel capacitor. Thereby, electric charge written in the pixel capacitor and electric charge written in the capacitor **C2** are redistributed and each capacitor receives the electric charge proportional to its capacitance ratio. Since the electric charge written in the pixel capacitors and the electric charge written in the capacitor **C2** have opposite polarities from each other, the redistributed electric charge is smaller than the electric charge stored during the previous (two fields before) negative field display period. Thus, when the electric charges necessary for the display in the current field are not equal to the redistributed electric charges, the pixel capacitor needs an additional charge. This addition of an electric charge is performed by setting the control switch **SW1** to the state **B** to write negative data from the data signal line **11** to the pixel capacitor. Because the electric charge to be written is only an additional amount at this time, the power consumption is significantly reduced.

After the writing period, the control switch **SW1** is set to the state **A** and the display period starts. The control switch **SW1** is again set to the state **D** immediately before the ending of the display period to transfer the data (electric charge) written in the pixel capacitor to the negative data holding capacitor **C2**.

By repeating series of these operations, the electric charges to be charged and discharged at the pixel capacitor which are involved in the inverse driving of an image display apparatus can be reduced. The operation in which the terminal **T2** is connected to the terminal **T5** and the data signal line is thereby connected to the pixel capacitor is repeated by every field in a predetermined period. Note that the data holding times of the positive data holding capacitor **C1** and the negative data holding capacitor **C2** need to be equal to or longer than a period equivalent to the time for two fields (0.03 - 0.04 seconds) and it is not a problem for production. Moreover, by employing a certain method, such as refreshing the data accumulated in the data holding capacitors **C1** and **C2** periodically, the data holding times are not limited to the field period described above.

A buffer can be provided between the storage capacitor **Cs1** or the liquid crystal capacitor **Cp1** and the data holding capacitor **C1** or **C2**.

A data correction circuit may be also provided to diminish a data fluctuation in the cases where a data fluctuation appears when the data is transferred between each of the capacitors, a leak of an electric charge occurs when the electric charge is held in the data holding capacitor or the pixel capacitor, or a leak of an electric charge occurs due to a switching element when the element is not conducting a current. Since this data correction circuit can equalize the data (electric charge) transferred from the data holding capacitor **C1** or **C2** into the pixel capacitor with the electric charge during the previous (two fields before) data display period, if the data of the current field is similar to or hardly different from the contents of the previous (two field before) data, the additional electric charge written in the data holding capacitor **C1** or **C2** need not be transferred to the pixel capacitor by setting the control switch to the state **C** or **D**.

Although the data holding capacitors **C1** and **C2** consist of capacitors, other data holding means, such as a memory or the like, can be used.

Only one scanning signal line **12** which controls the control switch **SW1** is shown in the apparatus illustrated in Figure **2**. However, the scanning signal line **12** can consist of a plurality of lines and is not limited to only one line. More specific examples of the configurations will be described later. Each state of the control switch **SW1** does not have to be a single state. For instance, the control states of the data transfer from the pixel capacitor to the data holding capacitor **C1** or **C2** and the data transfer from the data holding capacitor **C1** or **C2** to the pixel capacitor can be different. The transfer paths of these data transfers may be also different.

Both of the positive data holding capacitors **C1** and the negative data holding capacitor **C2** are not necessary and only one of them may be used. Resulting from this, the configuration of the control switch **SW1** is also changed.

The data holding capacitors **C1** and **C2** can be used as the storage capacitor **Cs1**. Specifically, the storage capacitor **Cs1** is omitted and the control switch **SW1** is maintained at the state **C** during the positive data display period and at the state **D** during the negative data display period, thereby the data holding capacitors **C1** and **C2** can perform the same function as the storage capacitor does. Accordingly, the storage capacitor element in the pixel can be omitted so that the ratio covered by liquid crystal in the pixel is increased and the opening ration of an image display apparatus can be increased.

When data (electric charge) is transferred from the data holding capacitor to the pixel capacitor by switching the connecting of the two terminals of the data holding capacitor (one is connected to the pixel capacitor and the other is connected to a reference electrode, such as a common electrode) in the opposite way, the positive data holding capacitor **C1** and the negative data holding capacitor **C2** may be replaced with one capacitor. At this point, the data holding capacitor has the data signal corresponding to the image of one previous field which is strongly related to the data for the next image and the data can be reversed in its polarity and written into the pixel capacitor. In such a case, the data holding capacitors **C1** and **C2** can be formed separately from the storage capacitor **Cs1**, or the data holding capacitors can be used as the storage capacitor **Cs1** as described above.

The above-described operation does not always need to be repeated between the display data storage means and the pixel capacitor (display means). Other means for stopping the operation can be provided as necessary, such as means for stopping the operation by an operator from outside of the apparatus or means that automatically stops the operation when the apparatus is turned on. These changes of designs described above will be applied similarly to the examples which will be described below.

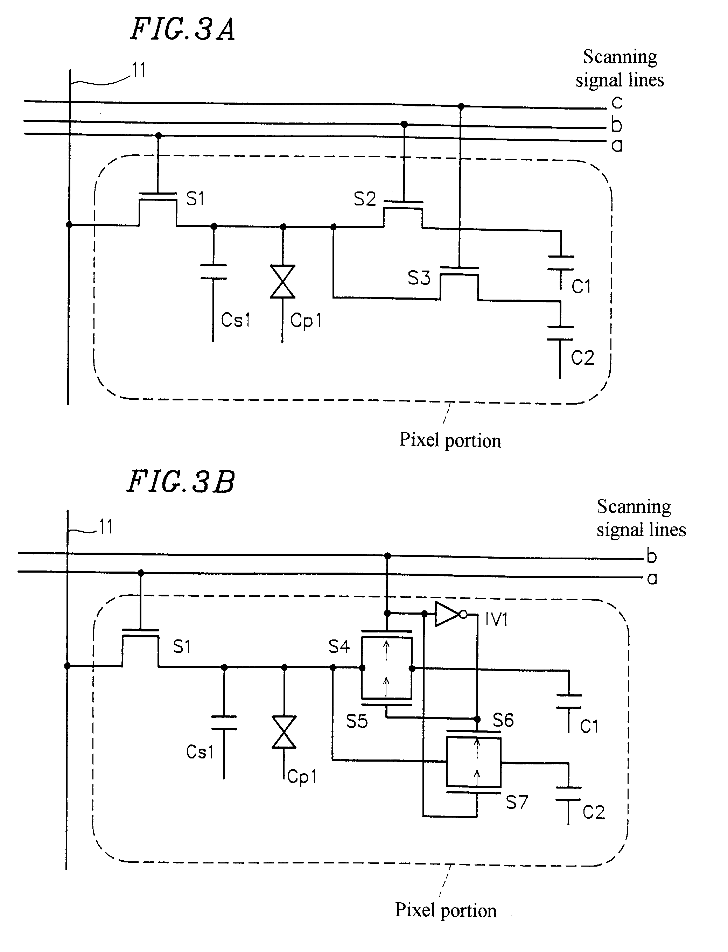

The examples, in which the control switch, the configuration of the pixel portion, and the scanning signal line of the above-described example are changed variously will be described referring to Figures **3** to **8**.

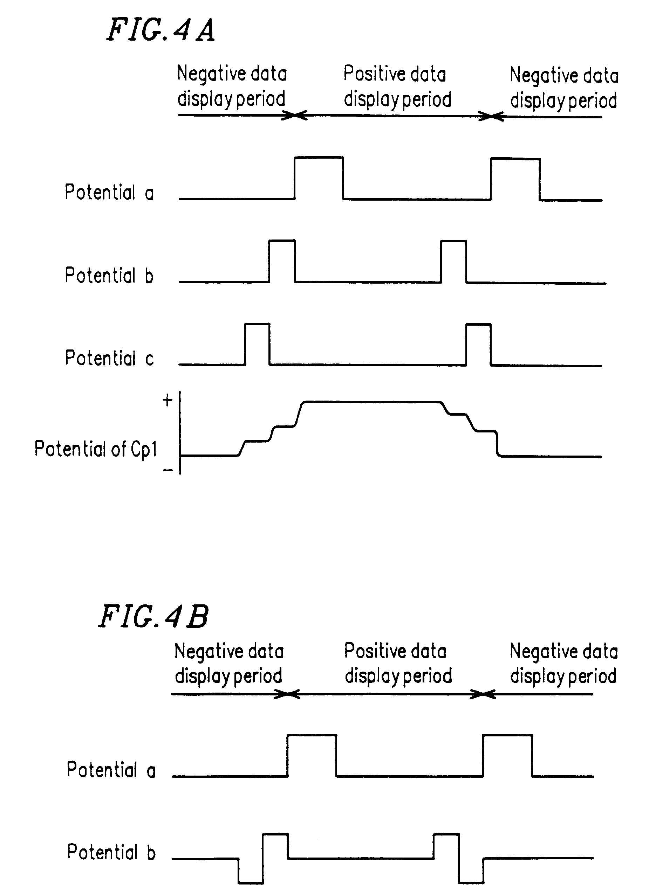

The examples in which a signal for controlling switching means is supplied from a plurality of scanning signal lines to each of pixels will be described. The circuit configurations of these examples are shown in Figures **3A** and **3B**. The examples of the driving signal waves (potentials of each scanning signal lines) and the potential of the liquid crystal capacitor **Cp1** are shown in Figures **4A** and **4B**. Figures **4A** and **4B** show the driving signal waves when transistors **S1**, **S2**, **S3**, **S4**, **S6**, and **S5**, **S7** in the Figures **3A** and **3B** are n-channel types and p-channel types, respectively.

The writing means and reading means having the transistors **S2**, **S3**, **S4**, **S5**, **S6**, and **S7** are not limited to those shown in the figures and other configurations may be used. In such cases, the driving signal waves are also changed according to the respective configurations.

The example shown in Figure **3A** has three scanning signal lines **a**, **b**, and **c**. The transistor **S1** is a switch controlled by a control signal applied from the scanning signal line **a** and writes data on a data signal line into a liquid crystal capacitor **Cp1** and a storage capacitor **Cs1**. The transistor connects the data signal line to the pixel capacitor electrically when the control signal is applied. The transistors **S2** and **S3** are switches controlled by the scanning signal lines **b** and **c**, respectively. The transistors **S2** and **S3** transfer the data (electric charge) written in a pixel capacitor to the data holding capacitor (capacitor) **C1** or **C2**, and/or transfer data in a data holding capacitor **C1** or **C2** to the pixel capacitor (**Cs1** and **Cp1**) according to the polarity of the data. The transistor **S2** electrically connects the pixel capacitor to the capacitor **C1** when **a** first control signal is applied from the scanning signal line **b**. The transistor **S3** electrically connects the pixel capacitor to the capacitor **C2** when a second control signal is applied from the scanning signal line **c**.

As shown in Figure **4A**, the scanning signal lines **b** and **c** are driven with pulses immediately before and after the display period corresponding to their respective image polarities, and the transistors **S2** and **S3** thereby become conductive. At this time, to avoid the electric charges from canceling each other by the shortcut between the data holding capacitors **C1** and **C2**, it is preferable that the rising of the potential of one of the transistors **S2** or **S3** occurs after the falling of the potential of the other transistor. However, even if both of the rising and falling happen simultaneously, as far as the time of the short circuit is not very long, the effect is not negated.

Figure **3B** shows an example having two scanning signal lines **a** and **b**. In this example, a switching circuit provided between a pixel capacitor (**Cs1** and **Cp1**) and both data holding capacitors **C1** and **C2**, comprises transistors (switches) **S4**, **S5**, **S6**, S7 having a CMOS (Complementary Metal-Oxide Semiconductor) structure and an inverter **IV1**. The driving signal wave patterns on the scanning signal lines of this configuration are shown in Figure **4B**.

The operation of the example shown in Figure **3B** will be described below. By setting a control signal from the scanning signal line a at a "HIGH" state (referred to as the "H" state hereinafter), data on the data signal line is transferred to the pixel capacitor (**Cs1**, **Cp1**). By receiving the control signal having the "H" state from the scanning signal line b, the transistors **S4** and **S5** become conductive. As a result, data (electric charge) can be transferred between the pixel capacitor (**Cs1, Cp1**) and the data holding capacitor **C1**. By receiving the control signal (a second control signal) having a "LOW" state (referred to as the "L" state hereinafter) from the scanning signal line **b**, the transistors **S6** and **S7** become conductive. When the scanning signal line **b** is set at an "HZ" (high impedance) state (where the potential of the control signal is lower than the threshold voltage of an n-channel type transistor and higher than the threshold voltage of a p-channel transistor), all the transistors **S4**, **S5**, **S6** and **S7** are in a non-conductive state. When the input of the inverter **IV1** is at the "HZ" state, its output is also at the "HZ" state.

In this example, the transistors **S5** and **S7** can be omitted. Or, the example may be also configured using only the transistors **S5**, **S7** and the inverter **IV1** without the transistors **S4** and **S6**.

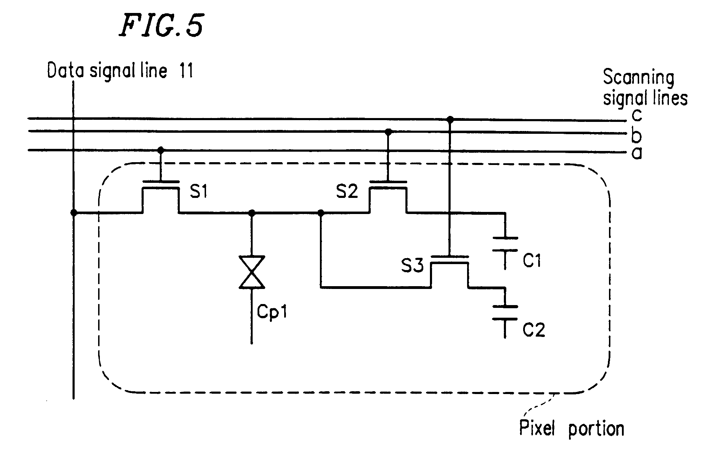

Figure **5** shows a pixel portion of an example wherein the control signals are provided from a plurality of scanning signal lines to each of the pixel portions and the data holding capacitor is also used as the storage capacitor for stabilizing images. In this example, all the transistors **S1**, **S2**, and **S3** are n-channel types.

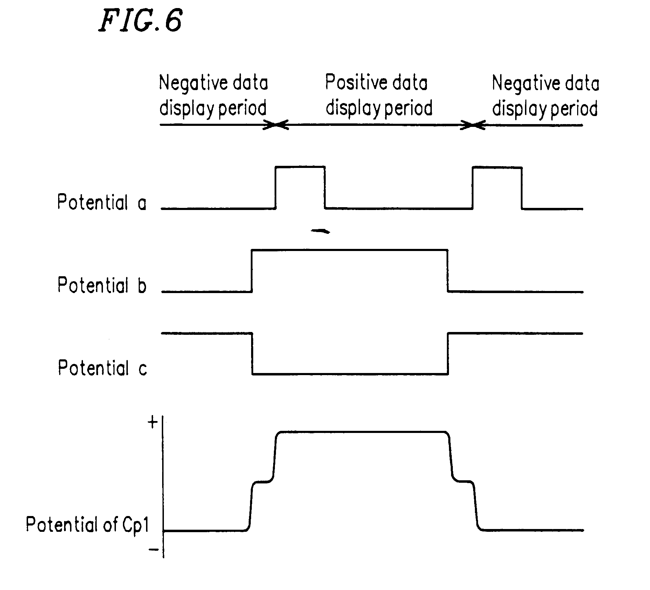

In the pixel portion shown in Figure **5**, the storage capacitor which was provided in parallel to the liquid crystal capacitor **Cp1** is omitted, and the data holding capacitors **C1** and **C2** also function as storage capacitors. In this configuration, the liquid crystal capacitor **Cp1** is connected in parallel to the data holding capacitor **C1** or **C2** for stabilizing images during the display period. The driving signal wave patterns (potentials) of the signal lines **a**, **b**, and **c** used in this example and the potential of the liquid crystal capacitor **Cp1** are shown in Figure **6**.

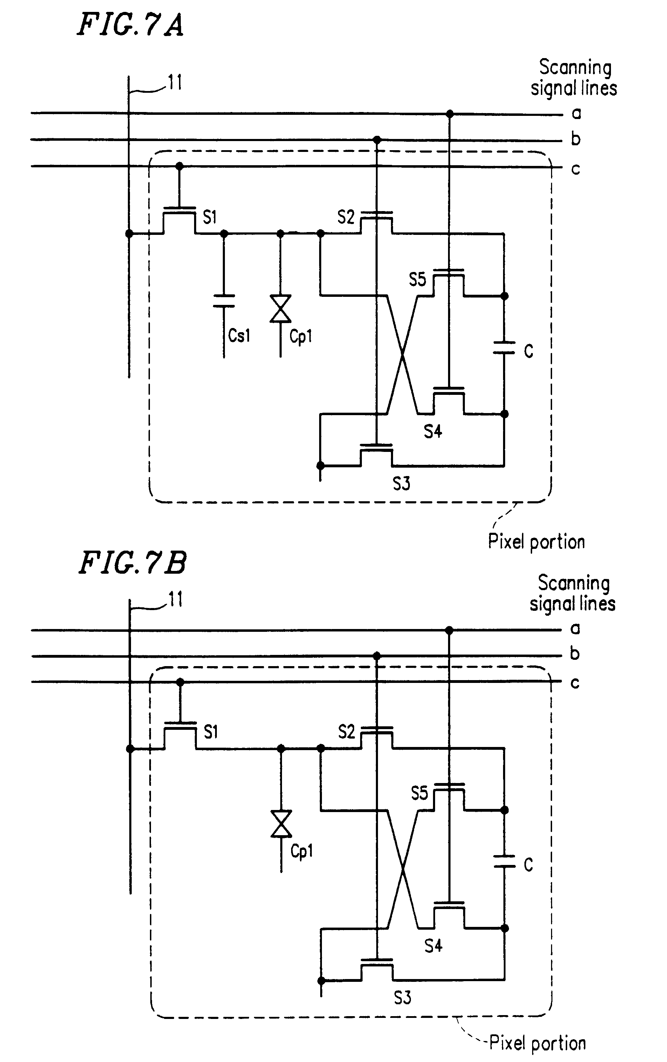

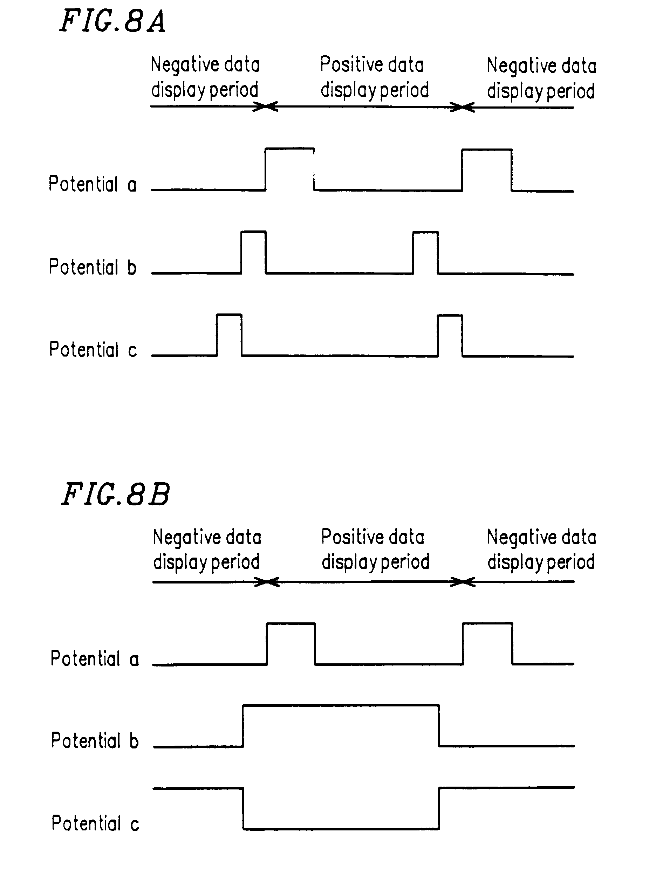

Figures **7A** and **7B** show examples where a control signal is supplied to each pixel from a plurality of scanning signal lines and a data holding capacitor **C2** is switched in accordance with the polarities of the image signal. The driving signal wave patterns (potentials) of scanning signal lines used in each of the examples are shown in Figures **8A** and **8B**. The transistors **S1**, **S2**, **S3**, **S4** and **S5** which are n-channel types are used in this example.

Figure **7A** shows an example in which a storage capacitor **Cs1** is provided in parallel to a liquid crystal capacitor. In this example, the connection of the two terminals of a data holding capacitor are switched by a switching circuit provided between a data holding capacitor **C** and a pixel capacitor (**Cs1, Cp1**) in accordance with the polarities of images (data signals) to be displayed. In accordance with the scanning signal lines having the signal wave patterns shown in Figure **8A**, positive data accumulated in the data holding capacitor **C** is written into the pixel capacitors (**Cs1** and **Cp1**) as negative data in the following field. With this configuration, the same effects attained in the example in Figure **3A** can be obtained with one data holding capacitor. Compared with the example shown in Figure **3B**, the number of the transistors, which are switching elements, increases by two and the number of the capacitors decreases by one. In a pixel portion, since the area occupied by one data holding capacitor is larger than the area occupied by two transistors, the effective display region can be increased.

Moreover, by combining the configuration of Figure **5** with that of Figure **7A**, a configuration where a data holding capacitor is also used as a storage capacitor **Cs1** can be realized as shown in Figure **7B**. The examples of the signal driving wave patterns of the scanning signal lines in this configuration are shown in Figure **8B**. In this example, there is only one capacitor in a pixel, and the region required for providing the data holding means can be very small.

In the examples described above, though the driving signals are supplied through the scanning signal lines **b** and **c** from outside of the pixel arrays formed into a matrix, the driving signals may be generated in each pixel by a signal applied to a single or a plurality of scanning signals **a** used for controlling the data transfer from the data signal line to the pixel capacitor (**Cs1, Cp1**).

This invention for lowering the power consumption of the pixel portions described above, can also be applied to lowering the power consumption of other portions, such as a sampling circuit or the like.

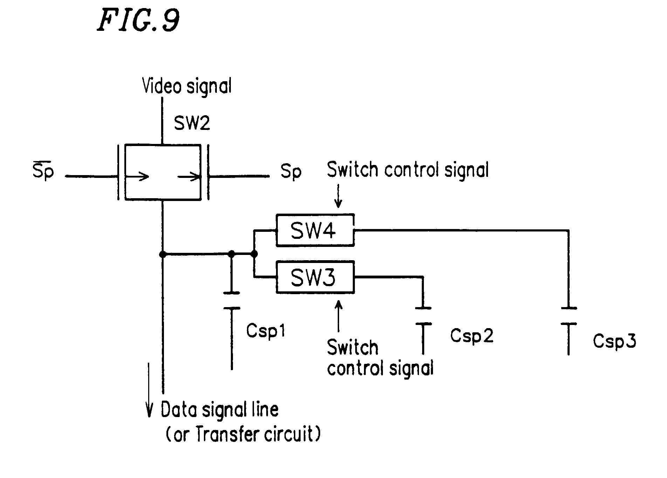

Figure **9** shows a case where the invention is applied to a sampling circuit of a liquid crystal display apparatus. The sampling circuit is provided in a data driver of the display apparatus for each data signal line. The sampling circuit supplies an image signal such as a video signal to each data signal line. The sampling circuit includes a sampling switch **SW2** into which a video signal is input. The sampling switch **SW2** is controlled by sampling signals **Sp** and **S̄p̄**. The output of the sampling switch **SW2** is connected to a sampling capacitor **Csp1**, and is further connected to a sampling storage capacitor **Csp2** and a sampling storage capacitor **Csp3** via a transfer switch **SW3** and a transfer switch **SW4**, respectively. A positive signal is transferred into the sampling storage capacitor **Csp2**, and a negative signal is transferred into a sampling storage capacitor **Csp3**. In Figure **9**, the sampling switch **SW2** is constructed by a transistor having a CMOS structure. Alternatively, the sampling switch **SW2** can be constructed by either of an n-channel transistor or a p-channel transistor. Herein, the sampling storage capacitors correspond to the above-described data storage means, and the transfer switches correspond to the above-described writing means and reading means.

Next, the operation in the sampling circuit will be described. The operation in this case is basically similar to the operation for the pixel portion described above.

In the sampling period, the sampling switch **SW2** is in a conductive state, so that the potential of the video signal (data) is written into the sampling capacitor **Csp1**. When the sampling period is terminated, the sampling switch **SW2** becomes non-conductive. In the case of a line sequential scanning system which is called a "driver sample-hold system", for example, the sampled data is transferred to a succeeding transfer circuit after a predetermined time. In the case of a point sequential scanning system which is called a "panel sample-hold system", the sampled data is transferred to the data signal lines immediately after the sampling.

When the transfer period is terminated, in the apparatus of the invention, at least a part of the electric charges stored in the sampling capacitor **Csp1** is transferred to the storage capacitor **Csp2** or **Csp3** depending on the polarity of the signal charged in the sampling capacitor **Csp1**. That is, when a positive signal is charged in the capacitor **Csp1**, the electric charge is transferred to the sampling storage capacitor **Csp2** via the transfer switch **SW3**. When a negative signal is charged in the capacitor **Csp1**, the electric charge is transferred to the sampling storage capacitor **Csp3** via the transfer switch **SW4**.

Next, the electric charges stored in the sampling storage capacitors **Csp2** and **Csp3** are transferred to the sampling capacitor **Csp1** depending on the polarity of a video signal to be sampled, immediately before or after the video signal is sampled. In other words, when the signal to be sampled by the sampling capacitor **Csp1** has a positive polarity, the electric charge stored in the sampling storage capacitor **Csp2** is transferred to the sampling capacitor **Csp1**. When the signal to be sampled has a negative polarity, the electric charge stored in the sampling storage capacitor **Csp3** is transferred to the sampling capacitor **Csp1**.

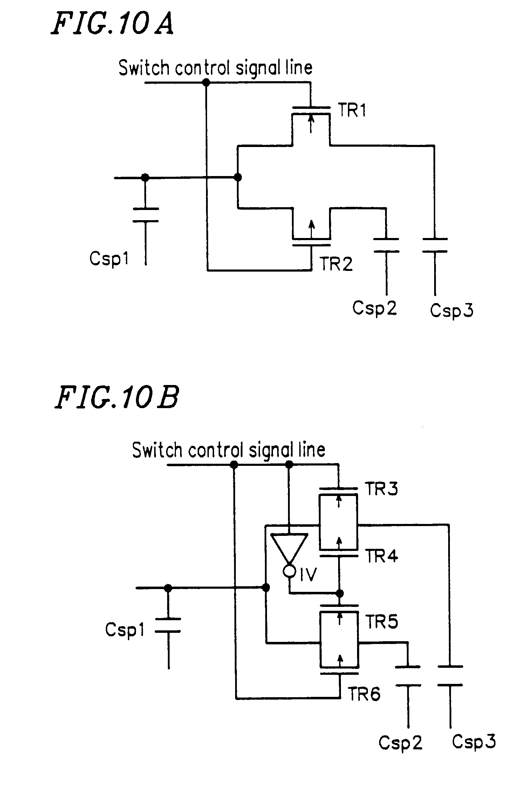

The transfer switches **SW3** and **SW4** may have such constructions as shown in Figures **10A** and **10B**. Figure **10A** shows the case where the transfer switches **SW4** and **SW3** are constructed with an n-channel transistor and a p-channel transistor, respectively. In this case, a transistor **TR1** is equivalent to the transfer switch **SW4**, and a transistor **TR2** is equivalent to the transfer switch **SW3**. Figure **10B** shows the case where the transfer switches **SW3** and **SW4** are constructed by CMOS switches. Transistors **TR3** and **TR4** are equivalent to the transfer switch **SW4**, and transistors **TR5** and **TR6** are equivalent to the transfer switch **SW3**. In these cases, a switch control signal for controlling the ON/OFF states of the transfer switches **SW3** and **SW4** can have one of three values, i.e., an H-state, an L-state, and a high-impedance HZ state. When the switch control signal is in the L-state, the transfer switch **SW3** becomes conductive. When the switch control signal is in the H-state, the transfer switch **SW4** becomes conductive. When the switch control signal is in the HZ-state, both of the transfer switches **SW3** and **SW4** become non-conductive (in an OFF state). In the case of Figure **10B**, an inverter **IV** is required to have such a construction that, when the switch control signal line is in the HZ-state, the output of the inverter also enters into the HZ-state.

In the circuits shown in Figures **10A** and **10B**, only one switch control signal line is provided. Alternatively, a plurality of switch control signal lines may be provided. In such a case, the construction of the transfer switches and the peripheral portion thereof should accordingly be changed.

The above method can be applied to cases where, when the sampling storage capacitors **Csp2** and **Csp3** are sufficiently larger than the sampling capacitor **Csp1**, the data (electric charge) used for a display is temporarily stored in data (electric charge) storage means such as a capacitor, and then used as data again, so as to lower the power consumption. When the sampling storage capacitors **Csp2** and **Csp3** are not sufficiently larger than the sampling capacitor **Csp1**, it is difficult to provide a display with good quality only using the data (electric charge) stored in the storage means. Thus, it is necessary to write additional data so as to provide a display with good quality. However, even in this case, there exists an effect in that the power consumption can be suppressed by an amount corresponding to the data (electric charge) read out from the storage means.

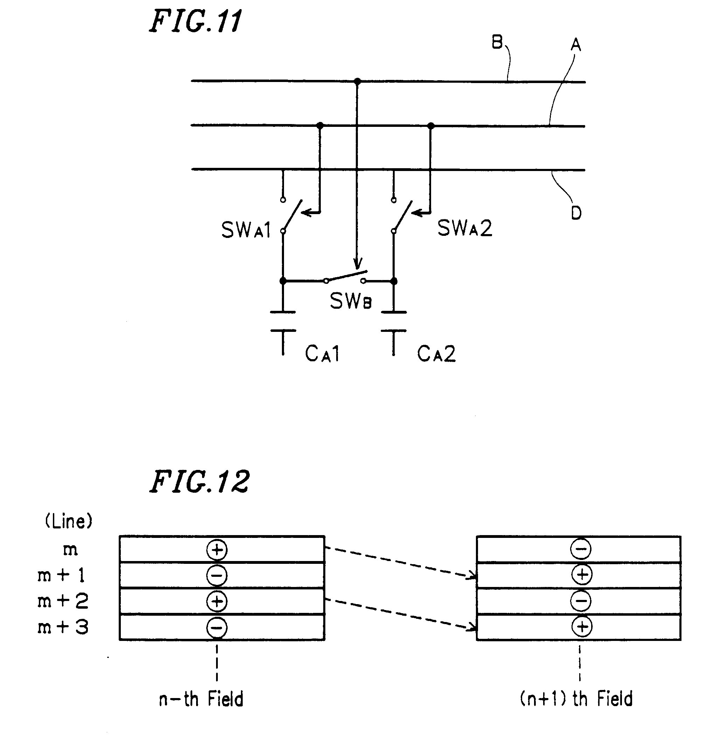

Figure **11** is a diagram showing a basic concept of a liquid crystal display apparatus in another example of the invention. In the liquid crystal display apparatus, after a display, the data (electric charge) used for the display or the like is transferred to another portion in which the power consumption is also suppressed. The liquid crystal display apparatus includes a scanning signal line group **A**, a scanning signal line **B**, and a signal line **D**. To the signal line **D**, capacitors (load-capacitors) **CA1** and **CA2** are connected via switches **SWA1** and **SWA2**, respectively. The switches **SWA1** and **SWA2** selectively connect and disconnect the signal line **D** to and from the respective capacitors. The states of the switches are controlled by the scanning signal line group **A**. A switch **SWB** (hereinafter referred to as a charge transfer switch) is provided in such a manner that one end thereof is connected between the switch **SWA1** and the capacitor **CA1**, an the other end is connected between the switch **SWA2** and the capacitor **CA2**. The charge transfer switch **SWB** transfers data (electric charge) between the capacitors **CA1** and **CA2**. The state of the charge transfer switch **SWB** is controlled by the scanning signal line **B**. These switches can be constructed, for example, by switching elements such as transistors. For comparison, in the conventional apparatus, the switch **SWB** was not provided, and the data fed through the signal line **D** was controlled by the scanning signal line group **A** and the switches **SWA1** and **SWA2**, and written into the capacitors **CA1** and **CA2**.

The operation of the above-described liquid crystal display apparatus will be described. First, the switch **SWA1** is made conductive (turned ON) by the scanning signal line group **A**, so that the data on the signal line **D** is written into the capacitor **CA1**.

Next, in the state where electric charge (data) written in the capacitor **CA1** is not required or is scarcely required in view of the function associated with the capacitor **CA1**, the switch **SWB** is made conductive (turned ON), so that the data (electric charge) in the capacitor **CA1** is transferred to the capacitor **CA2**.

Thereafter, or at the same timing if possible, the switch **SWA2** is made conductive (turned ON), so that the data (electric charge) on the signal line **D** is written into the capacitor **CA2**. As a result, the movement of electric charge from the signal line **D** which may occur along with the writing of the data (electric charge) into the capacitor **CA2** can be suppressed. Thus, the power consumption as a display apparatus can be lowered.

In Figure **11**, the capacitors **CA1** and **CA2** are connected to one and the same signal line **D**. Alternatively, the capacitors **CA1** and **CA2** may be connected to different signal lines, respectively. The scanning signal line group **A** for controlling the states of the switches **SWA1** and **SWA2** does not necessarily include a plurality of signal lines. There occurs no problem even when the scanning signal line group **A** includes only one signal line. In addition, the scanning signal line **B** is not necessarily a single line. There occurs no problem even when a plurality of scanning signal lines **B** are provided. Moreover, the scanning signal line group **A** and the scanning signal line **B** are not necessarily separately provided. One and the same scanning signal line can serve as the scanning signal line group **A** and the scanning signal line **B**.

In Figure **11**, the signal line **D** is used. Alternative to the signal line **D**, another line, for example a power supply line can be used. In such a case, as required, the capacitor may be substituted for another component such as a cell.

The transfer of data (electric charge) for lowering the power consumption is not necessarily performed only between the capacitors. Alternatively, the data transfer may be performed, for example, between a capacitor and a signal line. The direction of the data (electric charge) transfer is not limited to one direction. The data transfer may be performed bidirectionally, for example, from the capacitor **CA1** to the capacitor **CA2** and from the capacitor **CA2** to the capacitor **CA1**.

The destination or the source of the charge transfer is not limited to one component. For example, the capacitor **CA1** may be a capacitor group including a plurality of capacitors. In addition, the charge transfer is not necessarily performed by one stage as shown in Figure **11**. Alternatively, the charge transfer can be performed by multiple stages. The above-mentioned notices are also applied to respective examples described below.

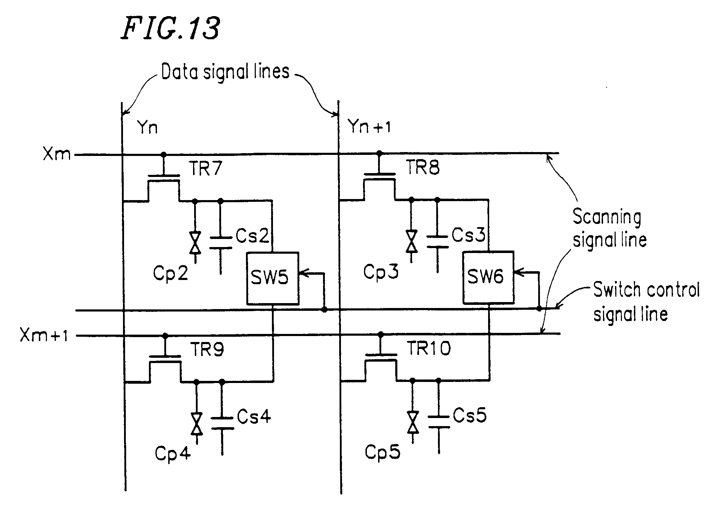

In the liquid crystal display apparatus, an AC drive is usually performed so as to prevent the liquid crystal from deteriorating. For example, in the case of so-called "frame and line inversion drive" which is generally used for driving an active matrix type liquid crystal display apparatus, data is preferably transferred in such a way as shown in Figure **12**.

Specifically, if data of positive polarity is written into the m-th line in the n-th field, data of negative polarity is written into the (m+1)th line, data of positive polarity is written into the (m+2)th line, and data of negative polarity is written into the (m+3)th line. In the next field, i.e., in the (n+1)th field, the polarities of data written into respective lines are inverted from those in the n-th field. In the (n+1)th field, data of negative polarity is written into the m-th line, data of positive polarity is written into the (m+1)th line, data of negative polarity is written into the (m+2)th line, and data of positive polarity is written into the (m+3)th line.

In order to perform the scanning in such a manner, for example as shown by arrows (broken lines) in Figure **12**, after the display of n-th field is finished and before the writing of the (n+1)th field, if the electric charge in the m-th line is transferred to the (m+1)th line, the electric charge in the (m+2)th line is transferred to the (m+3)th line, it is possible to lower the current consumption along with the writing of the (n+1)th field. That is, it is possible to realize an active matrix type display apparatus with low power consumption.

Figure **13** is a diagram showing another example of the invention. In Figure **13**, the reference letters **Xm** and **Xm+1** denote scanning signal lines, and **Yn** and **Yn+1** denote data signal lines. In the vicinity of the crossings of the scanning signal lines **Xm** and **Xm+1** and the data signal lines **Yn** and **Yn+1**, transistors **TR7**, **TR8**, **TR9**, and **TR10** are disposed. In each of the transistors **TR7**, **TR8**, **TR9**, and **TR10**, the gate electrode is connected to the scanning signal lines **Xm** and **Xm+1**, and one of the source and drain electrodes is connected to the data signal lines **Yn** and **Yn+1**. The other of the source and drain electrodes is connected to liquid crystal capacitors (capacitors having capacitances between pixel electrodes and counter electrodes, hereinafter referred to as LC capacitors) **Cp2**, **Cp3**, **Cp4**, and **Cp5**, and connected to storage capacitors **Cs2**, **Cs3**, **Cs4**, and **Cs5** which are additionally used as required.

A charge transfer switch **SW5** is connected between the other electrode of the transistor **TR7** and the other electrode of the transistor **TR9**, and a charge transfer switch **SW6** is connected between the other electrode of the transistor **TR8** and the other electrode of the transistor **TR10**.

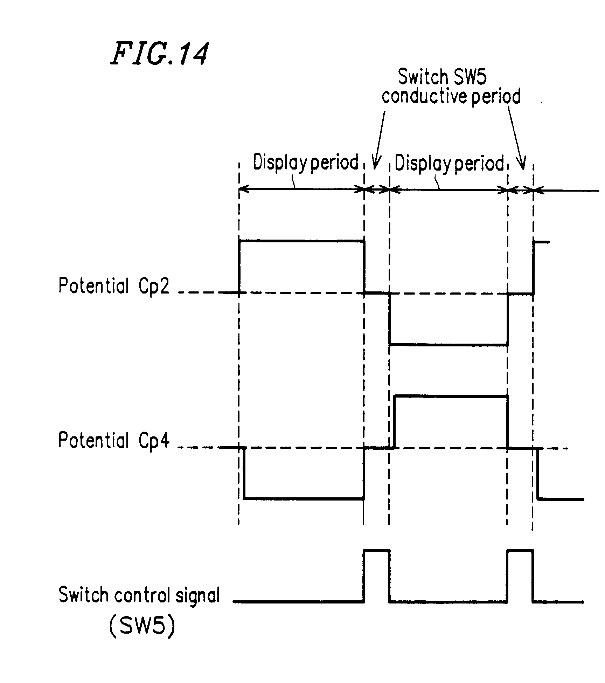

The switches **SW5** and **SW6** are switches for moving data (electric charges) between pixels. If the data (electric charge) is required to be transferred between pixels, the switches are made conductive (turned ON) by a switch control signal fed through a switch control signal line. For example, as is shown in Figure **14**, after the display of pixel having the LC capacitor **Cp2** is finished, the switch control signal is made "H", so that the switch **SW5** is made conductive (turned ON). Thus, the electric charge is transferred between the LC capacitor **Cp2** and the LC capacitor **Cp4**. Then, the switch **SW5** is made non-conductive (turned OFF), the writing into the LC capacitor **Cp2** is performed, and successively the writing into the LC capacitor **Cp4** is performed. In the case where the data signal lines for applying data signals to the LC capacitor **Cp2** and the LC capacitor **Cp4** are different from each other, the writing to the LC capacitor **Cp2** and the writing to the LC capacitor **Cp4** may be simultaneously performed.

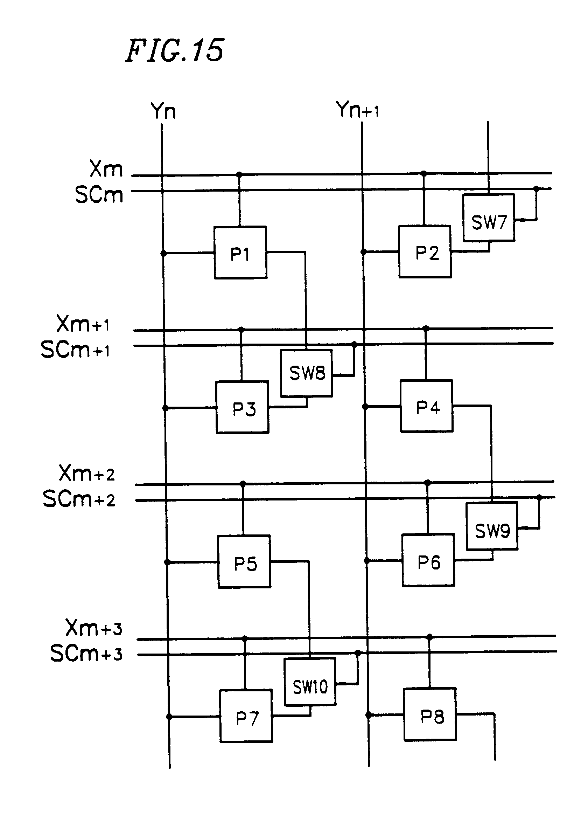

In this example, as is shown in Figure **13**, all pairs of pixels adjacent to each other via the same scanning signal line **Xm** or **Xm+1** are connected via the charge transfer switches **SW5** and **SW6** in a similar way. Alternatively, as is shown in Figure **15**, respective pairs of pixels adjacent to each other via different scanning signal lines **Xm**, **Xm+1**, **Xm+2**, and **Xm+3** may be connected via charge transfer switches **SW7**, **SW8**, **SW9**, and **SW10**. In such a case, the charge transfer switches **SW7**, **SW8**, **SW9**, and **SW10** are controlled by switch control signal lines **SCm**, **SCm+1**, **SCm+2**, and **SCm+3**, respectively. In Figure **15**, the reference letters **P1**, **P2**, etc. denote pixels each including a pixel driving element, a liquid crystal capacitor, and the like.

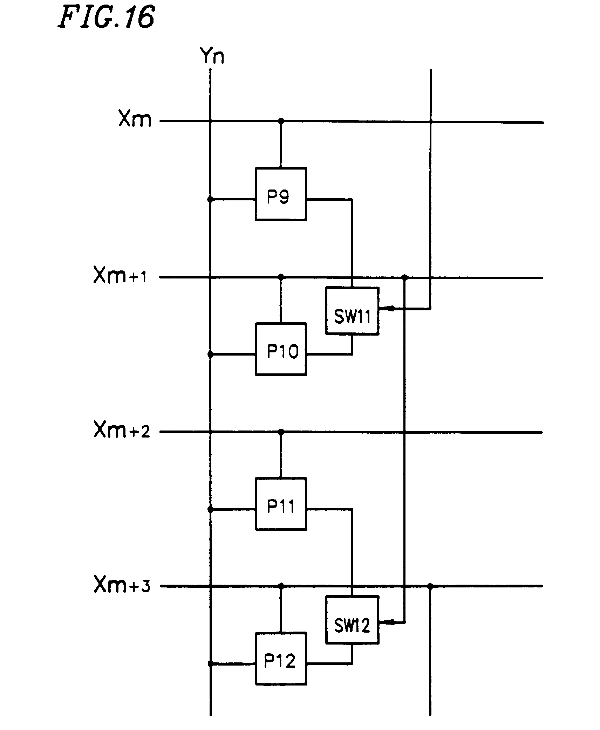

Furthermore, as is shown in Figure **16**, another connection example can be adopted. In this example, the scanning signal lines **Xm**, **Xm+1**, **Xm+2**, and **Xm+3** also function as switch control signal lines. That is, the scanning signal line **Xm+1** transfers a signal to write the data into a pixel **P10**, a transfer switch **SW12** thereby becomes conductive. The transfer switch **SW12** is provided in such a manner that one terminal thereof is connected to a pixel **P11** connected to the scanning signal line **Xm+2** and the other terminal is connected to a pixel **P12** connected to the scanning signal line **Xm+3**.

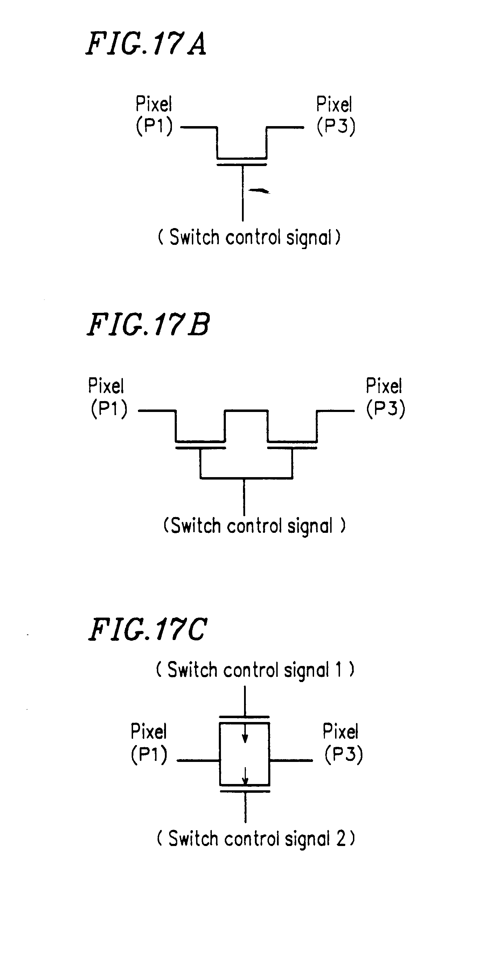

As examples of a construction of a charge transfer switch which performs data transfer between pixels, constructions shown in Figures **17A**, **17B**, and **17C** can be adopted. Figure **17A** shows an example using a p-channel transistor or n-channel transistor controlled by a switch control signal. Figure **17B** shows an example in which such transistors are connected in series. Figure **17C** shows an example using a transistor having a CMOS structure controlled by a switch control signal **1** and a switch control signal **2**.

As described above, in the constructions described with reference to Figures **13** to **17C**, the charge transfer is performed for each pixel unit. Alternatively, the charge transfer may be performed by each scanning signal unit.

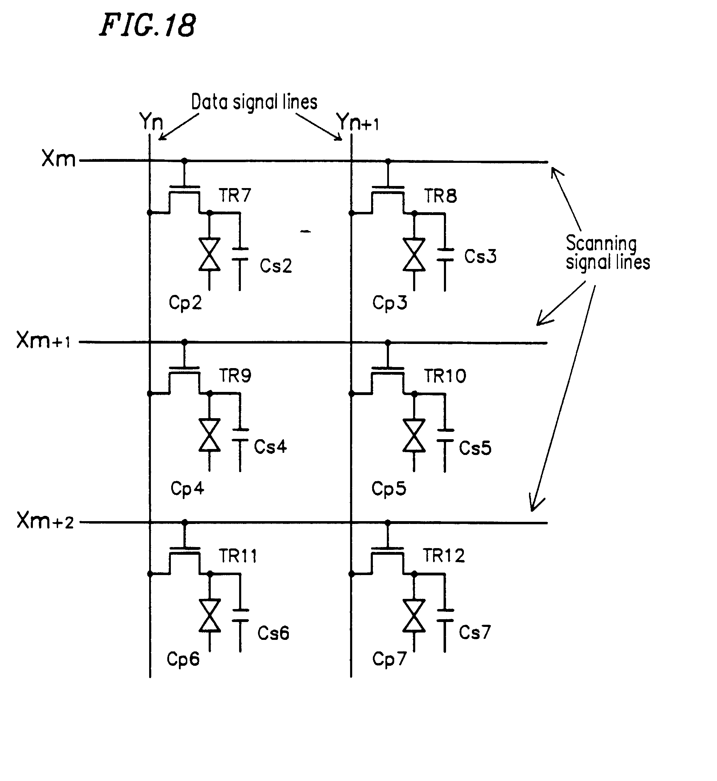

Figure **18** is a diagram showing a construction in the case where the charge transfer is performed by each scanning signal line unit. In this case, a charge transfer switch **SW** is not provided between pixels. The construction itself is the same as the conventional construction shown in Figure **23**, but the operation of the scanning signal line is different from the conventional case.

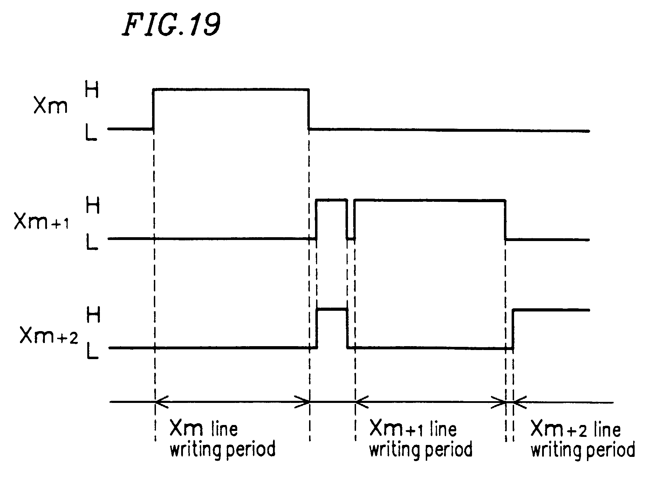

Figure **19** is a diagram for explaining an exemplary driving of the circuit shown in Figure **18**. In this case, the respective transistors **TR7**, **TR8**, **TR9**, **TR10**, **TR11,** and **TR12** enter into the active state when respective gate signals fed through the scanning signal lines **Xm**, **Xm+1**, and **Xm+2** are at the H level.

First, in the present field, image data is transferred to the pixel capacitor (storage capacitor **Cs2** and the LC capacitor **Cp2**, and storage capacitor **Cs3** and the LC capacitor **Cp3**) of the pixel portion connected to the scanning signal line **Xm.** In the meantime, electric charge (data signal) having a first polarity (positive) transferred during the previous field, has been stored in the pixel capacitor (storage capacitor **Cs4** and the LC capacitor **Cp4**) of the pixel portion (first pixel portion) connected to the scanning signal line **Xm+1**. On the other hand, electric charge (data signal) having a second polarity (negative) transferred during the previous field, has been stored in the pixel capacitor (storage capacitor **Cs6** and the LC capacitor **Cp6**) of the pixel portion (second pixel portion) connected to the scanning signal line **Xm+2**. The step in which the charge is transferred from the data signal line to the pixel capacitor (**Cs4** and **Cp4**) of the first pixel portion, refers to a first step. The step in which the charge is transferred from the data signal line to the pixel capacitor (**Cs6** and **Cp6**) of the second pixel portion, refers to a second step. The first polarity and the second polarity can be negative and positive, respectively.

Next, in the present field, the pixel capacitor of the first pixel portion is electrically connected to the pixel capacitor of the second pixel portion (refers to a third step). In the third step, the scanning signal lines **Xm+1** and **Xm+2** are set at the "H" state. As a result, the pixel capacitor (**Cs4** and **Cp4**) of the first pixel portion and the pixel capacitor (**Cs6** and **Cp6**) of the second pixel portion are electrically connected each other, thereby electric charges move between them.

Thereafter, only the scanning signal line **Xm+1** is set at the "H" state, and data is written into the pixel capacitor of the first pixel portion. In this stage, electric charge having the second polarity is stored in the pixel capacitor (**Cs4** and **Cp4**) of the first pixel portion. Since charges having the second polarity have been moved to the first pixel portion from the second pixel portion in the third step, the amount of electric charges provided to the first pixel portion for displaying is reduced. As a result, the power consumption of the apparatus can be lowered.

The driving waveforms for the scanning signal lines are not limited to those shown in Figure **19**. Alternatively, the scanning signal lines are driven by signals having other waveforms. For example, the data writing period and the period for transferring data between pixels can be separately set as shown in Figure **19**. Alternatively, these periods are successively set as required.

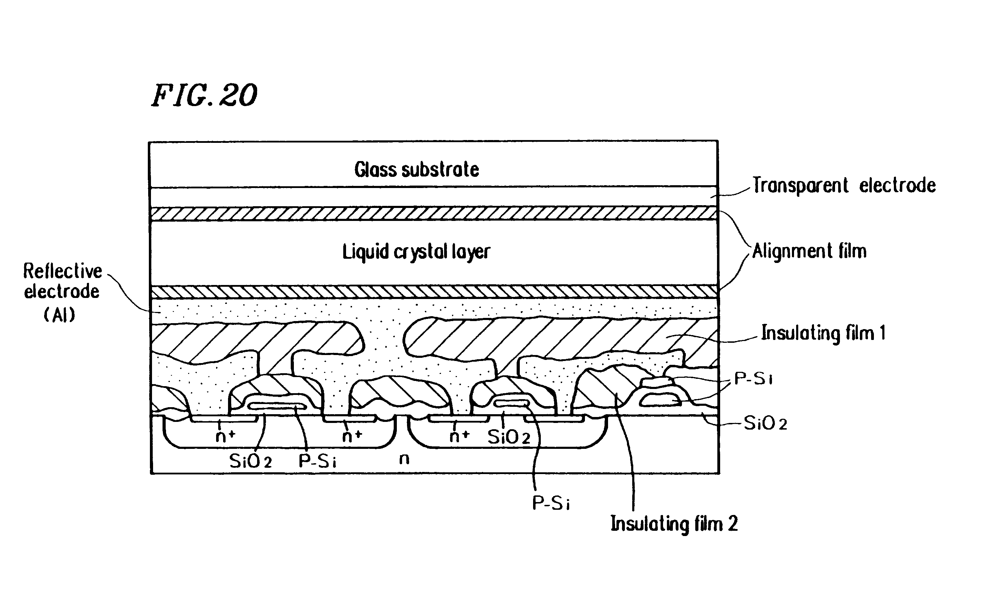

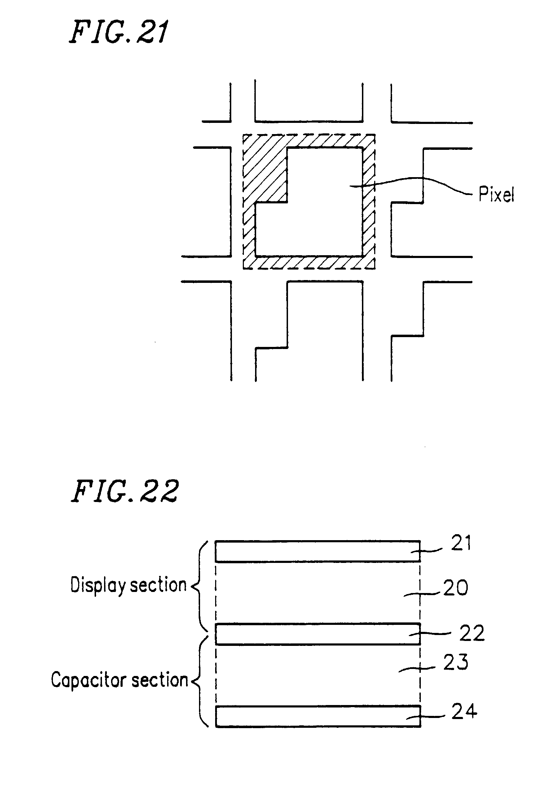

The present invention can be applied to both a reflection type display apparatus and a transmission type display apparatus. When the present invention is applied to the reflection type display apparatus, as is shown in Figure **20**, it is possible to provide data storage means, a switching circuit, and the like over an entire region under a reflective electrode which is disposed on a side opposite to the display side with a liquid crystal layer as a display medium interposed therebetween. When the present invention is applied to the transmission type display apparatus, as shown in Figure **21**, it is necessary to provide data storage means, a switching circuit, and the like under a light shielding film indicated by hatching, so that the opening ration may disadvantageously be reduced. For example, consider a display apparatus in which the width across corners is 5 inches and the number of pixels is 480 (V) x 640 (H) x 3 (RGB). An area of a portion constituting the data storage means, the switching circuit, or the like is required to be about 160 μm x about 53 μm in the reflection type, but an area allowed for the formation is large, so that there occurs no problem. On the contrary, in the transmission type, if it is assumed that the opening ratio is about 55%, an area of a portion constituting the data storage means, the switching circuit, or the like is about 4620 μm$^2$ (about 68 μ x about 68 μm). Thus, the following special consideration is required for the formation of the apparatus.

As an example, a liquid crystal display apparatus is described. In the case where an amorphous silicon TFT (thin film transistor) is formed on a glass substrate which is now mainly used, the size of the TFT element is large, so that the space in which a switching circuit and the like is limited to some extent. On the other hand, in the case where a TFT is formed in a polycrystalline silicon film or a single crystal silicon substrate or the like, the device size can be reduced. This provides an excess space for the formation of the switching circuit and the like, and the circuit configuration under the pixels can be desirably selected.

Figures **20** and **21** each merely show one exemplary construction. The construction and the material can be varied. For example, in Figure **20**, the reflective electrode is made of Al. Alternatively, the reflective electrode may be made of Mo, Ta, or the like without causing any problems.

In the case of the transmission type, if the capacitor is constituted as data storage means, and the capacitor is made of a transmission type dielectric, the pixel portion can be effectively utilized. Figure **22** shows one example. Specifically, a liquid crystal layer **20** is provided between a pixel electrode **21** and a counter electrode **22**, so as to constitute a display section. In addition, the counter electrode which functions as one of electrodes of the capacitor and an electrode which functions as the other electrode of the capacitor are disposed so as to face each other. A dielectric layer **23** is disposed therebetween, so as to constitute a capacitor section.

The configuration of the electrodes **21, 22**, and **24** is not limited to the specific one shown in Figure **22**, but may be varied. For example, two counter electrodes **22** are provided. One electrode functions as an electrode of the capacitor, and the other functions as a counter electrode. Alternatively, the electrode which is adjacent to the electrode **24** for the capacitor may be the pixel electrode **21**. In Figure **22**, other components such as a substrate are not shown. However, it is appreciated that such other components can be additionally provided as required.

Hereinabove, the method for reducing the power consumption has been described. However, only basic constructions are described in the above examples. It is appreciated that the above examples can be modified or combined as desired, without causing any problems.

Various other modifications will be apparent to those skilled in the art. Accordingly, it is not intended that the scope of the claims appended hereto be limited to the description as set forth herein.

**Claims**

1. An active matrix type image display apparatus comprising: a plurality of data signal lines (11); a plurality of scanning signal lines (12;a,b,c) crossing the plurality of data signal lines; and a plurality of pixel portions disposed in a matrix in areas enclosed by the plurality of data signal lines and the plurality of scanning signal lines, wherein each of the plurality of pixel portions includes a pixel capacitance (Cp1,Cs1) for storing electric charge supplied from at least one of the plurality of data signal lines, to display an image; and a switching means (SW1; S2, S3, S4, S5);

wherein at least one pixel portion further comprises a storage means (C1, C2);

characterised in that the switching means selectively electrically connects the pixel capacitance in the at least one pixel portion to the storage means (C1, C2); and in that the storage means stores at least part of an electrical charge stored in the pixel capacitance.

2. An active matrix type image display apparatus as claimed in claim 1 wherein the switching means (SW1) electrically connects at least one of the data signal lines to the pixel capacitance for a predetermined period.

3. An active matrix type image display apparatus as claimed in claim 2 wherein the storage means has a first storage capacitor (C 1) and a second storage capacitor (C2).

4. An active matrix type image display apparatus as claimed in claim 3 wherein the switching means receives a first control signal and a second control signal from at least one of the plurality of scanning signal lines, the switching means (SW1) electrically connecting the pixel capacitance (Cp1) to the first storage capacitor (C1) when the first control signal is received, and the witching means electrically connecting the pixel capacitance (Cp1) to the second storage capacitor (C2) when the second control signal is received.

5. An image display apparatus according to claim 4, wherein the switching means (SW1) receives both the first control signal and the second control signal at least once in the predetermined period.

6. An image display apparatus according to claim 2, wherein the switching means (SW1) receives a first control signal and a second control signal from at least one of the plurality of scanning signal lines (12; a, b, c), the switching means transferring electric charge having a positive polarity from the pixel capacitance (Cp1) to the storage means (C, C1, C2) when the first control signal is received, and the switching means transferring electric charge having a negative polarity from the pixel capacitance (Cp1) to the storage means C, C1, C2 when the second control signal is received.

7. An image display apparatus according to claim 6, wherein the switching means (SW1) receives both the first control signal and the second control signal at least once in the predetermined period.

8. An image display apparatus according to claim 1, wherein the pixel capacitance includes a liquid crystal capacitor (Cp1) having a pair of electrodes and a liquid crystal layer disposed between the electrodes, and a storage capacitor (Cs1) disposed in parallel with the liquid crystal capacitor.

9. An active matrix type image display apparatus comprising: a plurality of data signal lines (Yn); sampling circuits for supplying image signals to the plurality of data signal lines; a plurality of scanning signal lines (Xm) crossing the plurality of data signal lines; and a plurality of pixel portions disposed in a matrix in areas enclosed by the plurality of data signal lines and the plurality of scanning signal lines, wherein one of the sampling circuits includes:

a sampling capacitance (Csp1) for storing electrical charge corresponding to the image signal; storage means (Csp2, Csp3) for storing at least part of the electrical charge stored in the sampling capacitance; and re-use means (SW3, SW4) for enabling electrical charge stored in the sampling capacitance (Csp1) to be re-used by: (a) transferring at least part of the electrical charge stored in the sampling capacitance (Csp1) to the storage means (Csp2, Csp3) thereby to store the transferred part of the electrical charge in the storage means; and (b) subsequently returning at least part of the electrical charge stored in the storage means (Csp2, Csp3) to the sampling capacitance (Csp1).

10. An image display apparatus as claimed in claim 9 wherein the storage means comprises a first storage capacitor (Csp2) for storing electrical charge having a positive polarity from the sampling capacitance and a second storage capacitor (Csp3) for storing electrical charge having a negative polarity from the sampling capacitance.

11. An image display apparatus as claimed in claim 10 wherein the re-use means comprises:

a first switching means (SW3) which selects between an operation for transferring at least part of an electrical charge having a positive polarity stored in the sampling capacitance to the first storage capacitor (Csp2) and an operation for transferring at least part of the electrical charge stored in the first storage capacitor to the sampling capacitance; and a second switching means (SW3) which selects between an operation for transferring at least part of an electrical charge having a negative polarity stored in the sampling capacitance to the second storage capacitor (Csp3) and an operation for transferring at least part of the electrical charge stored in the second storage capacitor to the sampling capacitance.

12. An image display apparatus as claimed in claim 9 wherein the sampling circuit further includes a sampling switch (SW2) for supplying an image signal to the data signal line associated with the sampling circuit during a sampling period for storing electrical charge on the sampling capacitance.

13. An image display apparatus as claimed in claim 12, wherein the re-use means returns at least part of the electrical charge stored in the storage means to the sampling capacitance (Csp1) immediately before or after the sampling period.

14. An image display apparatus as claimed in claim 9 wherein the sampling capacitance is directly connected to the data signal line associated with the sampling circuit.

15. An image display apparatus as claimed in claim 9 wherein the re-use means comprises a switching means which selects between an operation for transferring at least part of an electrical charge stored in the sampling capacitance to the storage means (Csp2, Csp3) and an operation for transferring at least part of the electrical charge stored in the storage means to the sampling capacitance.

16. An image display apparatus as claimed in claim 11 wherein the polarity of the electrical charge stored in the sampling capacitance is inverted in response to the inversion of the polarity of the image signal applied to the data signal line associated with the sampling circuit.

17. An active matrix type image display apparatus comprising: a plurality of data signal lines ($Y_n$); a plurality of scanning signal lines ($X_m$) crossing the plurality of data signal lines; and a plurality of pixel portions disposed in a matrix in areas enclosed by the plurality of data signal lines and the plurality of scanning signal lines, wherein each of the plurality of pixel portions includes a pixel capacitance (Cp2,Cs2; Cp3,Cs3; Cp4,Cs4;Cp5,Cs5) for storing electrical charge supplied from at least one of the plurality of data signal lines, to display an image; and a switching means (SW5, SW6); characterised in that the switching means is adapted to selectively electrically connect the pixel capacitance (Cp2,Cs2;Cp3,Cs3) of a first pixel portion to the pixel capacitance (Cp4,Cs4;Cp5,Cs5) of a second pixel portion, whereby at least part of an electrical charge stored in the pixel capacitance of the first pixel portion is transferred to the pixel capacitance of the second pixel portion.

18. An image display apparatus according to claim 17, further comprising at least one control signal line, wherein the switching means (SW5, SW6) electrically connects the pixel capacitance (Cp2, Cs2; Cp3, Cs3) of the first pixel portion to the pixel capacitance (Cp4, Cs4; Cp5, Cs5) of the second pixel portion, according to a control signal received from the control signal line.

19. An image display apparatus according to claim 17 wherein the pixel capacitance includes a liquid crystal capacitor (Cp2, Cp3, Cp4, Cp5) having a pair of electrodes and a liquid crystal layer disposed between the electrodes, and a storage capacitor (Cs2, Cs3, Cs4, Cs5) disposed in parallel with the liquid crystal capacitor.

20. A method of displaying an image on an active matrix type image display apparatus having a plurality of data signal lines, and a plurality of pixel portions disposed in a matrix, each of the plurality of pixel portions having a pixel capacitor for storing electric charge to display an image; the method comprising:

a first step of supplying electric charge corresponding to image data to a pixel capacitor of a first pixel portion via one of the plurality of data signal lines;
a second step of supplying electric charge corresponding to image data to a pixel capacitor of a second pixel portion via one of the plurality of data signal lines; and
a third step of electrically connecting the pixel capacitor of the first pixel portion to the pixel capacitor of the second pixel portion.

21. An image displaying method according to claim 20, wherein the first step is a step of supplying electric charge having a first polarity to the pixel capacitor of the first pixel portion, and the second step is a step of supplying electric charge having a second polarity, which is different from the first polarity, to the pixel capacitor of the second pixel portion.

**Patentansprüche**

1. Bildanzeigevorrichtung vom Aktivmatrixtyp mit: einer Vielzahl von Datensignalleitungen (11); einer Vielzahl von Abrastersignalleitungen (12; a, b, c), die die Vielzahl von Datensignalleitungen schneiden; und einer Vielzahl von Pixelabschnitten, die in einer Matrix in Bereichen angeordnet sind, die durch die Vielzahl von Datensignalleitungen und die Vielzahl von Abrastersignalleitungen umschlossen sind, wobei jeder Pixelabschnitt unter der Vielzahl von Pixelabschnitten eine Pixelkapazität (Cp1, Cs1) zum Einspeichern elektrischer Ladungen aufweist, wie sie von mindestens einer der Vielzahl von Datensignalleitungen zugeführt werden, um ein Bild anzuzeigen; und einer Schalteinrichtung (SW1; S2, S3, S4, S5);

- wobei mindestens ein Pixelabschnitt ferner eine Speichereinrichtung (C1, C2) aufweist;

**dadurch gekennzeichnet,** dass die Schalteinrichtung die Pixelkapazität in mindestens einem Pixelabschnitt elektrisch selektiv mit der Speichereinrichtung (SW1) verbindet und die Speichereinrichtung mindestens einen Teil der in der Pixelkapazität gespeicherten elektrischen Ladung speichert.

2. Bildanzeigevorrichtung vom Aktivmatrixtyp nach Anspruch 1, bei der die Schalteinrichtung (SW1) mindestens eine der Datensignalleitungen elektrisch für eine vorbestimmte Periode mit der Pixelkapazität verbindet.

3. Bildanzeigevorrichtung vom Aktivmatrixtyp nach Anspruch 2, bei der die Speichereinrichtung einen ersten Speicherkondensator (C1) und einen zweiten Speicherkondensator (C2) aufweist.

4. Bildanzeigevorrichtung vom Aktivmatrixtyp nach Anspruch 3, bei der die Schalteinrichtung von mindestens einer der Vielzahl von Abrastersignalleitungen ein erstes Steuersignal und ein zweites Steuersignal empfängt und die Speichereinrichtung (SW1) die Pixelkapazität (Cp1) elektrisch mit dem ersten Speicherkondensator (C1) verbindet, wenn das erste Steuersignal empfangen wird, und sie die Pixelkapazität (Cpl) elektrisch mit dem zweiten Speicherkondensator (C2) verbindet, wenn das zweite Steuersignal empfangen wird.

5. Bildanzeigevorrichtung nach Anspruch 4, bei der die Schalteinrichtung (SW1) sowohl das erste Steuersignal als auch das zweite Steuersignal mindestens ein Mal innerhalb der vorbestimmten Periode empfängt.

6. Bildanzeigevorrichtung nach Anspruch 2, bei der die Schalteinrichtung (SW1) von mindestens einer der Vielzahl von Abrastersignalleitungen (12; a, b, c) ein erstes Steuersignal und ein zweites Steuersignal empfängt, sie elektrische Ladung mit positiver Polarität von der Pixelkapazität (Cp1 zur Speichereinrichtung (C, C1, C2) überträgt, wenn das erste Steuersignal empfangen wird, und sie elektrische Ladung mit negativer Polarität von der Pixelkapazität (Cpl) an die Speichereinrichtung (C, C1, C2) überträgt, wenn das zweite Steuersignal empfangen wird.

7. Bildanzeigevorrichtung nach Anspruch 6, bei der die Schalteinrichtung (SW1) sowohl das erste Steuersignal als auch das zweite Steuersignal mindestens ein Mal innerhalb der vorbestimmten Periode empfängt.

8. Bildanzeigevorrichtung nach Anspruch 1, bei der die Pixelkapazität einen Flüssigkristallkondensator (Cp1) mit einem Paar Elektroden und einer zwischen den Elektroden eingebetteten Flüssigkristallschicht sowie einen Speicherkondensator (Cs1) aufweist, der parallel zum Flüssigkristallkondensator angeordnet ist.

9. Bildanzeigevorrichtung vom Aktivmatrixtyp mit: einer Vielzahl von Datensignalleitungen (Yn) ; Abtastschaltungen zum Liefern von Bildsignalen an die Vielzahl von Datensignalleitungen; einer Vielzahl von Abrastersignalleitungen (Xm), die die Vielzahl von Datensignalleitungen schneiden; und einer Vielzahl von Pixelabschnitten, die in einer Matrix in Bereichen angeordnet sind, die durch die Vielzahl von Datensignalleitungen und die Vielzahl von Abrastersignalleitungen umschlossen sind, wobei eine der Abtastschaltungen folgendes aufweist:

- eine Abtastkapazität (Csp1) zum Einspeichern elektrischer Ladung, die dem Bildsignal entspricht;
- eine Speichereinrichtung (Csp2, Csp3) zum Speichern mindestens eines Teils der in der Abtastkapazität gespeicherten elektrischen Ladung; und
- eine Wiederverwendungseinrichtung (SW3, SW4) zum Ermöglichen einer Wiederverwendung von in der Abtastkapazität (Csp1) gespeicherter elektrischer Ladung durch folgendes: (a) Übertragen mindestens eines Teils der in der Abtastkapazität (Csp1) gespeicherten elektrischen Ladung an die Speichereinrichtung (Csp2, Csp3), um dadurch den übertragenen Teil der elektrischen Ladung in die Speichereinrichtung einzuspeichern; und (b) anschließendes Zurückleiten zumindest eines Teils der in der Speichereinrichtung (Csp2, Csp3) gespeicherten elektrischen Ladung an die Abtastkapazität (Csp1).

10. Bildanzeigevorrichtung nach Anspruch 9, bei der die Speichereinrichtung einen ersten Speicherkondensator (Csp2) zum Speichern elektrischer Ladung mit positiver Polarität von der Abtastkapazität sowie einen zweiten Speicherkondensator (Csp3) zum Speichern elektrischer Ladung mit negativer Polarität von der Abtastkapazität aufweist.

11. Bildanzeigevorrichtung nach Anspruch 10, bei der die Wiederverwendungseinrichtung folgendes aufweist:

- eine erste Umschalteinrichtung (SW3), die zwischen einem Betrieb zum Übertragen mindestens eines Teils einer in der Abtastkapazität gespeicherten elektrischen Ladung mit positiver Polarität an den ersten Speicherkondensator (Csp2) und einem Betrieb zum Übertragen mindestens eines Teils der im ersten Speicherkondensator gespeicherten elektrischen Ladung an die Abtastkapazität auswählt; und
- eine zweite Umschalteinrichtung (SW3), die zwischen einem Betrieb zum Übertragen mindestens eines Teils einer in der Abtastkapazität gespeicherten elektrischen Ladung mit negativer Polarität an den zweiten Speicherkondensator (Csp3) und einem Betrieb zum Übertragen mindestens eines Teils der im zweiten Speicherkondensator gespeicherten elektrischen Ladung an die Abtastkapazität auswählt.

12. Bildanzeigevorrichtung nach Anspruch 9, bei der die Abtastschaltung ferner einen Abtastschalter (SW2) zum Liefern eines Bildsignals an die Datensignalleitung aufweist, die der Abtastschaltung während einer Abtastperiode zugeordnet ist, um elektrische Ladung in der Abtastkapazität zu speichern.

13. Bildanzeigevorrichtung nach Anspruch 12, bei der die Wiederverwendungseinrichtung mindestens einen Teil der in der Speichereinrichtung gespeicherten elektrischen Ladung unmittelbar vor oder nach der Abtastperiode an die Abtastkapazität (Csp1) zurückleitet.

14. Bildanzeigevorrichtung nach Anspruch 9, bei der die Abtastkapazität unmittelbar mit der Datensignalleitung verbunden ist, die der Abtastschaltung zugeordnet ist.

15. Bildanzeigevorrichtung nach Anspruch 9, bei der die Wiederverwendungseinrichtung eine Umschalteinrichtung aufweist, die zwischen einem Betrieb zum Übertragen mindestens eines Teils einer in der Abtastkapazität gespeicherten elektrischen Ladung in die Speichereinrichtung (Csp2, Csp3) und einem Betrieb zum Übertragen mindestens eines Teils der in der Speichereinrichtung gespeicherten elektrischen Ladung an die Abtastkapazität auswählt.

16. Bildanzeigevorrichtung nach Anspruch 11, bei der die Polarität der in der Abtastkapazität gespeicherten elektrischen Ladung auf die Umkehrung der Polarität des Bildsignals umgekehrt wird, wie es an die der Abtastschaltung zugeordnete Datensignalleitung angelegt wird.

17. Bildanzeigevorrichtung vom Aktivmatrixtyp mit: einer Vielzahl von Datensignalleitungen (Yn) ; einer Vielzahl von Abrastersignalleitungen (Xm), die die Vielzahl von Datensignalleitungen schneiden; und einer Vielzahl von Pixelabschnitten, die in einer Matrix in Bereichen angeordnet sind, die durch die Vielzahl von Datensignalleitungen und die Vielzahl von Abrastersignalleitungen umschlossen sind, wobei jeder Pixelabschnitt unter der Vielzahl von Pixelabschnitten eine Pixelkapazität (Cp2, Cs2; Cp3, Cs3; Cp4, Cs4; Cp5, Cs5) zum Einspeichern elektrischer Ladungen aufweist, wie sie von mindestens einer der Vielzahl von Datensignalleitungen zugeführt werden, um ein Bild anzuzeigen; und einer Schalteinrichtung (SW5, SW6);
**dadurch gekennzeichnet**, dass die Schalteinrichtung so ausgebildet ist, dass sie die Pixelkapazität (Cp2, Cs2; Cp3, Cs3) eines ersten Pixelabschnitts selektiv elektrisch mit der Pixelkapazität (Cp4, Cs4; Cp5, Cs5) eines zweiten Pixelabschnitts verbindet, wodurch mindestens ein Teil einer in der Pixelkapazität des ersten Pixelabschnitts gespeicherten elektrischen Ladung an die Pixelkapazität des zweiten Pixelabschnitts übertragen wird.

18. Bildanzeigevorrichtung nach Anspruch 17, ferner mit mindestens einer Steuersignalleitung, wobei die Schalteinrichtung (SW5, SW6) die Pixelkapazität (Cp2, Cs2; Cp3, Cs3) des ersten Pixelabschnitts entsprechend einem von der Steuersignalleitung empfangenen Steuersignal elektrisch mit der Pixelkapazität (Cp4, Cs4; Cü5, Cs5) des zweiten Pixelabschnitts verbindet.

19. Bildanzeigevorrichtung nach Anspruch 17, bei der die Pixelkapazität einen Flüssigkristallkondensator (Cp2, Cp3, Cp4, Cp5) mit einem Paar Elektroden und einer zwischen den Elektroden angeordneten Flüssigkristallschicht sowie einen Speicherkondensator (Cs2, Cs3, Cs4, Cs5) aufweist, der parallel zum Flüssigkristallkondensator angeordnet ist.

20. Verfahren zum Anzeigen eines Bilds auf einer Bildanzeigevorrichtung vom Aktivmatrixtyp mit einer Vielzahl von Datensignalleitungen und einer Vielzahl von in einer Matrix angeordneten Pixelabschnitten, von denen jeder einen Pixelkondensator zum Speichern elektrischer Ladung zum Anzeigen eines Bilds aufweist; wobei das Verfahren folgendes umfasst: - einen ersten Schritt des Lieferns elektrischer Ladung, die Bilddaten entspricht, an einen Pixelkondensator eines ersten Pixelabschnitts über eine der Vielzahl von Datensignalleitungen;

- einen zweiten Schritt des Lieferns elektrischer Ladung, die Bilddaten entspricht, an einen Pixelkondensator eines zweiten Pixelabschnitts über eine der Vielzahl von Datensignalleitungen; und

- einen dritten Schritt des elektrischen Verbindens des Pixelkondensators des ersten Pixelabschnitts mit dem Pixelkondensator des zweiten Pixelabschnitts.

21. Bildanzeigeverfahren nach Anspruch 20, bei dem der erste Schritt ein Schritt des Lieferns elektrischer Ladung mit erster Polarität an den Pixelkondensator des ersten Pixelabschnitts ist und der zweite Schritt ein Schritt des Lieferns elektrischer Ladung mit zweiter Polarität, die von der ersten Polarität verschieden ist, an den Pixelkondensator des zweiten Pixelabschnitts ist.

**Revendications**

1. Dispositif d'affichage d'image du type à matrice active comprenant: une multiplicité de lignes de signaux de données (11); une multiplicité de lignes de signaux de balayage (12; a, b, c) croisant la multiplicité de lignes de signaux de données; et une multiplicité de parties de pixel disposées suivant une matrice dans les zones délimitées par la multiplicité de lignes de signaux de données et la multiplicité de lignes de signaux de balayage, dans lequel chaque partie de la multiplicité de parties de pixel comprend un condensateur de pixel (Cp1, Cs1) pour stocker la charge électrique fournie par au moins l'une des lignes de la multiplicité de lignes de signaux de données, afin d'afficher une image; et un moyen de commutation (SW1; S2, S3, S4, S5);

dans lequel au moins une partie de pixel comprend en outre un moyen de stockage (C1, C2);

caractérisé en ce que le moyen de commutation relie électriquement, de façon sélective, le condensateur de pixel contenu dans ladite partie de pixel au nombre d'au moins un au moyen de stockage (C1, C2); et en ce que le moyen de stockage stocke au moins une partie d'une charge électrique stockée dans le condensateur de pixel.

2. Dispositif d'affichage d'image du type à matrice active selon la revendication 1, dans lequel le moyen de commutation (SW1) relie électriquement au moins l'une des lignes de signaux de données au condensateur de pixel pendant une période prédéterminée.

3. Dispositif d'affichage d'image du type à matrice active selon la revendication 2, dans lequel le moyen de stockage comporte un premier condensateur de stockage (C1) et un second condensateur de stockage (C2).

4. Dispositif d'affichage d'image du type à matrice active selon la revendication 3, dans lequel le moyen de commutation reçoit un premier signal de commande et un second signal de commande en provenance d'au moins une ligne de la multiplicité de lignes de signaux de balayage, le moyen de commutation (SW1) reliant électriquement le condensateur de pixel (Cp1) au premier condensateur de stockage (C1) lorsque le premier signal de commande est reçu, et le moyen de commutation reliant électriquement le condensateur de pixel (Cp1) au second condensateur de stockage (C2) lorsque le second signal de commande est reçu.

5. Dispositif d'affichage d'image selon la revendication 4, dans lequel le moyen de commutation (SW1) reçoit à la fois le premier signal de commande et le second signal de commande au moins une fois pendant la période prédéterminée.

6. Dispositif d'affichage d'image selon la revendication 2, dans lequel le moyen de commutation (SW1) reçoit un premier signal de commande et un second signal de commande en provenance d'au moins une ligne de la multiplicité de lignes de signaux de balayage (12; a, b, c), le moyen de commutation transférant vers le moyen de stockage (C, C1, C2) la charge électrique de polarité positive qui provient du condensateur de pixel (Cp1) lorsque le premier signal de commande est reçu, et le moyen de commutation transférant au moyen de stockage (C, C1, C2) la charge électrique de polarité négative qui provient du condensateur de pixel (Cp1), lorsque le second signal de commande est reçu.

7. Dispositif d'affichage d'image selon la revendication 6, dans lequel le moyen de commutation (SW1) reçoit à la fois le premier signal de commande et le second signal de commande au moins une fois pendant la période prédéterminée.

8. Dispositif d'affichage d'image selon la revendication 1, dans lequel le condensateur de pixel comprend un condensateur à cristaux liquides (Cp1) comportant une paire d'électrodes et une couche de cristaux liquides disposée entre les électrodes, ainsi qu'un condensateur de stockage (Cs1) disposé en parallèle avec le condensateur à cristaux liquides.

9. Dispositif d'affichage d'image du type à matrice active comprenant: une multiplicité de lignes de signaux de données (Yn); des circuits d'échantillonnage pour fournir des signaux d'image à la multiplicité de lignes de signaux de données; une multiplicité de lignes de signaux de balayage (Xm) croisant la multiplicité de lignes de signaux de données; et une multiplicité de parties de pixel disposées suivant une matrice dans les zones délimitées par la multiplicité de lignes de signaux de données et la multiplicité de lignes de signaux de balayage, dans lequel un des circuits d'échantillonnage comprend:

un condensateur d'échantillonnage (Cspl) servant à stocker la charge électrique correspondant au signal d'image;
un moyen de stockage (Csp2, Csp3) servant à stocker au moins une partie de la charge électrique stockée dans le condensateur d'échantillonnage; et
un moyen de ré-utilisation (SW3, SW4) pour permettre la ré-utilisation de la charge électrique stockée dans le condensateur d'échantillonnage (Cspl) en: (a) transférant au moins une partie de la charge électrique stockée dans le condensateur d'échantillonnage (Csp1) au moyen de stockage (Csp2, Csp3) afin de stocker la partie transférée de la charge électrique dans le moyen de stockage; et (b) en renvoyant ensuite au moins une partie de la charge électrique stockée dans le moyen de stockage (Csp2, Csp3) au condensateur d'échantillonnage (Csp1).

10. Dispositif d'affichage d'image selon la revendication 9, dans lequel le moyen de stockage comprend un premier condensateur de stockage (Csp2) servant à stocker la charge électrique de polarité positive qui provient du condensateur d'échantillonnage et un second condensateur de stockage (Csp3) servant à stocker la charge électrique de polarité négative qui provient du condensateur d'échantillonnage.

11. Dispositif d'affichage d'image selon la revendication 10, dans lequel le moyen de ré-utilisation comprend:

un premier moyen de commutation (SW3) qui effectue une sélection entre une opération consistant à transférer au premier condensateur de stockage (Csp2) au moins une partie d'une charge électrique de polarité positive qui est stockée dans le condensateur d'échantillonnage, et une opération consistant à transférer au condensateur d'échantillonnage au moins une partie de la charge électrique stockée dans le premier condensateur de stockage; et
un second moyen de commutation (SW3) qui effectue une sélection entre une opération servant à transférer au second condensateur de stockage (Csp3) au moins une partie d'une charge électrique de polarité négative qui est stockée dans le condensateur d'échantillonnage et une opération servant à transférer au condensateur d'échantillonnage au moins une partie de la charge électrique stockée dans le second condensateur de stockage.

12. Dispositif d'affichage d'image selon la revendication 9, dans lequel le circuit d'échantillonnage comprend en outre un commutateur d'échantillonnage (SW2) pour fournir un signal d'image à la ligne de signaux d'image associée au circuit d'échantillonnage pendant une période d'échantillonnage servant à stocker la charge électrique dans le condensateur d'échantillonnage.

13. Dispositif d'affichage d'image selon la revendication 12, dans lequel le moyen de ré-utilisation renvoie au condensateur d'échantillonnage (Csp1), immédiatement avant ou après la période d'échantillonnage, au moins une partie de la charge électrique stockée dans le moyen de stockage.

14. Dispositif d'affichage d'image selon la revendication 9, dans lequel le condensateur d'échantillonnage est directement relié à la ligne de signaux de données associée au circuit d'échantillonnage.

15. Dispositif d'affichage d'image selon la revendication 9, dans lequel le moyen de ré-utilisation comprend un moyen de commutation qui effectue une sélection entre une opération consistant à transférer au moyen de stockage (Csp2, Csp3) au moins une partie d'une charge électrique stockée dans le condensateur d'échantillonnage et une opération consistant à transférer au condensateur d'échantillonnage au moins une partie de la charge électrique stockée dans le moyen de stockage.

16. Dispositif d'affichage d'image selon la revendication 11, dans lequel la polarité de la charge électrique stockée dans le condensateur d'échantillonnage est inversée en réponse à l'inversion de la polarité du signal d'image appliqué à la ligne de signaux de données associée au circuit d'échantillonnage.

17. Dispositif d'affichage d'image du type à matrice active comprenant: une multiplicité de lignes de signaux de données ($Y_n$); une multiplicité de lignes de signaux de balayage ($X_m$) croisant la multiplicité de lignes de signaux de données; et une multiplicité de parties de pixel disposées suivant une matrice dans les zones délimitées par la multiplicité de lignes de signaux de données et la multiplicité de lignes de signaux de balayage, dans lequel chaque partie de la multiplicité de parties de pixel comprend un condensateur de pixel (Cp2, Cs2; Cp3, Cs3; Cp4, Cs4; Cp5, Cs5) servant à stocker la charge électrique fournie par au moins l'une des lignes de la multiplicité de lignes de signaux de données, afin d'afficher une image; et un moyen de commutation (SW5, SW6);

caractérisé en ce que le moyen de commutation est adapté pour relier électriquement, de façon sélective, le condensateur de pixel (Cp2, Cs2; Cp3, Cs3) d'une première partie de pixel au condensateur de pixel (Cp4, Cs4; Cp5, Cs5) d'une seconde partie de pixel, si bien qu'au moins une partie d'une charge électrique stockée dans le condensateur de pixel de la première partie de pixel est transférée au condensateur de pixel de la seconde partie de pixel.

**18.** Dispositif d'affichage d'image selon la revendication 17, comprenant en outre au moins une ligne de signaux de commande, dans lequel le moyen de commutation (SW5, SW6) relie électriquement le condensateur de pixel (Cp2, Cs2; Cp3, Cs3) de la première partie de pixel au condensateur de pixel (Cp4, Cs4; Cp5, Cs5) de la seconde partie de pixel, conformément à un signal de commande reçu de la ligne de signaux de commande.

**19.** Dispositif d'affichage d'image selon la revendication 17, dans lequel le condensateur de pixel comprend un condensateur à cristaux liquides (Cp2, Cp3, Cp4, Cp5) comportant une paire d'électrodes et une couche de cristaux liquides disposée entre les électrodes, ainsi qu'un condensateur de stockage (Cs2, Cs3, Cs4, Cs5) disposé parallèle avec le condensateur à cristaux liquides.

**20.** Procédé d'affichage d'une image sur un dispositif d'affichage d'image du type à matrice active comportant une multiplicité de lignes de signaux de données, et une multiplicité de parties de pixel disposées suivant une matrice, chaque partie de la multiplicité de parties de pixel comportant un condensateur de pixel pour stocker une charge électrique, afin d'afficher une image; le procédé comprenant:

une première étape au cours de laquelle une charge électrique correspondant à des données d'image est fournie à un condensateur de pixel d'une première partie de pixel par l'intermédiaire de l'une des lignes de la multiplicité de lignes de signaux de données;
une seconde étape au cours de laquelle une charge électrique correspondant à des données d'image est fournie à un condensateur de pixel d'une seconde partie de pixel par l'intermédiaire de l'une des lignes de la multiplicité de lignes de signaux de données; et
une troisième étape au cours de laquelle le condensateur de pixel de la première partie de pixel est relié électriquement au condensateur de pixel de la seconde partie de pixel.

**21.** Procédé d'affichage d'image selon la revendication 20, dans lequel la première étape est une étape consistant à fournir au condensateur de pixel de la première partie de pixel une charge électrique présentant une première polarité, et la seconde étape est une étape consistant à fournir au condensateur de pixel de la seconde partie de pixel une charge électrique ayant une seconde polarité, qui est différente de la première polarité.

## FIG.1

## FIG.2

## FIG.3A

Scanning
signal lines

Pixel portion

## FIG.3B

Scanning
signal lines

Pixel portion

## FIG. 4 A

Negative data display period | Positive data display period | Negative data display period

Potential a

Potential b

Potential c

Potential of Cp1
+
−

## FIG. 4 B

Negative data display period | Positive data display period | Negative data display period

Potential a

Potential b

## FIG.5

Data signal line 11

Scanning signal lines

c
b
a

S1

S2

Cp1

S3

C1

C2

Pixel portion

# FIG.6

## FIG.7A

Scanning
signal lines

Pixel portion

## FIG.7B

Scanning
signal lines

Pixel portion

## FIG.8A

## FIG.8B

## FIG.9

Video signal

SW2

$\overline{Sp}$ ⟶ ⟶ Sp    Switch control signal

SW4

SW3

Csp1

Switch
control signal

Csp2

Csp3

↓ Data signal line
(or Transfer circuit)

## FIG.10 A

Switch control signal line

TR1

Csp1

TR2

Csp2    Csp3

## FIG.10 B

Switch control signal line

TR3

TR4

IV

Csp1

TR5

TR6

Csp2    Csp3

*FIG.11*

*FIG.12*

(Line)
m
m+1
m+2
m+3

n-th Field

(n+1) th Field

## *FIG.13*

Data signal lines

Yn  Yn+1

Xm

TR7  TR8

Cs2  Cs3

Cp2  SW5  Cp3  SW6

Scanning
signal line

Switch control
signal line

Xm+1

TR9  TR10

Cs4  Cs5

Cp4  Cp5

*FIG.14*

Switch SW5
conductive period

Display period

Display period

Potential Cp2

Potential Cp4

Switch control signal
(SW5)

## *FIG.15*

*FIG.16*

## *FIG.17A*

Pixel (P1) — Pixel (P3)

( Switch control signal )

## *FIG.17B*

Pixel (P1) — Pixel (P3)

(Switch control signal )

## *FIG.17C*

( Switch control signal 1 )

Pixel (P1) — Pixel (P3)

( Switch control signal 2 )

*FIG.18*

Data signal lines

Yn    Yn+1

Xm

TR7         TR8

Cs2         Cs3

Cp2         Cp3

Scanning
signal lines

Xm+1

TR9         TR10

Cs4         Cs5

Cp4         Cp5

Xm+2

TR11        TR12

Cs6         Cs7

Cp6         Cp7

## FIG.19

Xm | H / L

Xm+1 | H / L

Xm+2 | H / L

Xm line writing period | Xm+1 line writing period | Xm+2 line writing period

EP 0 631 271 B1

## FIG. 20

Glass substrate

Transparent electrode

Alignment film

Liquid crystal layer

Reflective electrode (Al)

Insulating film 1

P-Si

SiO₂

n⁺    n⁺    n⁺    SiO₂

SiO₂    P-Si    n

P-Si

Insulating film 2

## FIG. 21

Pixel

## FIG. 22

Display section {
— 21
— 20
— 22

Capacitor section {
— 23
— 24

## *FIG.23*